# EUROPÄISCHE PATENTSCHRIFT

(11) **EP 2 258 947 B1**
(45) Veröffentlichungstag und Bekanntmachung des Hinweises auf die Patenterteilung: **22.08.2012**
(21) Anmeldenummer: 10163871.6
(22) Anmeldetag: 26.05.2010
(51) Int. Cl.: F03G 6/06

(54) **Modularer thermoelektrischer Wandler**
Modular thermoelectric converter
Convertisseur thermoélectrique modulaire

(30) Priorität: 03.06.2009 EP 09007361
(43) Veröffentlichungstag der Anmeldung: 08.12.2010
(73) Patentinhaber: Ittner, Thilo, Dr., 88212 Ravensburg (DE)
(72) Erfinder: Ittner, Thilo, Dr., 88212 Ravensburg (DE)
(74) Vertreter: Grünecker, Kinkeldey, Stockmair & Schwanhäusser

(56) Entgegenhaltungen:
- WO-A-2008/146109
- US-A- 5 901 556
- US-A1- 2003 192 323
- US-B1- 6 775 982

## Beschreibung

Die Erfindung betrifft einen thermoelektrischen Wandler zur Umwandlung von Wärme oder Kälte oder Sonnenlicht in elektrische Energie bzw. zur Erzeugung von Wärme und Kälte sowie ein Verfahren zur Verwendung des thermoelektrischen Wandlers.

Für die Erzeugung von elektrischer Energie bzw. Wärme und Kälte aus Sonnenlicht gibt es eine Vielzahl von Möglichkeiten. Beispielsweise besteht die Möglichkeit, mit Hilfe einer solarbetriebenen Wärmekraftmaschine und eines Dynamos oder Generators elektrische Energie zu erzeugen. Sodann erlaubt der Einsatz einer Wärmepumpe die Erzeugung von Wärme und Kälte. Des Weiteren besteht die Möglichkeit, mit Hilfe einer Vuilleumiermaschine und Sonnenenergie direkt Kälte bzw. Wärme zu erzeugen.

In verschiedenen Ansätzen wird versucht, die Erzeugung von elektrischer Energie bzw. Wärme und Kälte mit Hilfe von Sonnenlicht im Hinblick auf einen möglichst hohen Wirkungsgrad und ein möglichst hohe Flexibilität (z. B. im Hinblick auf verschiedenartige Einsatzbereiche) zu verbessern.

Thermoelektrische Wandler sind Wärmekraftmaschinen bzw. Wärmepumpen, bei denen (z. B. mit Hilfe von Sonnenlicht erzeugte) Wärme oder Kälte in elektrische Energie umgewandelt wird bzw. bei denen elektrische Energie verwendet wird, um Wärme und Kälte zu erzeugen, siehe z.B. US 2003/0192323. Weiterhin kann ein thermoelektrischer Wandler eine Vorrichtung sein, die Wärme und/oder Kälte unter Verwendung von elektromagnetischen Komponenten in Wärme und Kälte auf gegebenenfalls anderen Temperaturniveaus umwandelt.

Je nach Einsatzgebiet können thermoelektrische Wandler auch modular aufgebaut sein. Ein modularer thermoelektrischer Wandler besteht aus einer Mehrzahl von thermoelektrischen Wandlermodulen, die aneinandergekoppelt sind. Ein analoges Beispiel hierfür ist z. B. ein Mehrzylinderverbrennungsmotor, bei dem jeder Kolben eines Zylinders mittels Kurbelwelle mit den übrigen Kolben gekoppelt ist.

Der nachfolgend beschriebenen Erfindung liegt die Aufgabe zugrunde, den Wirkungsgrad eines thermoelektrischen Wandlermoduls zu erhöhen und/oder eine Mehrzahl von thermoelektrischen Wandlermodulen möglichst effektiv im Hinblick auf Wirkungsgrad und flexiblen Einsatzbereich miteinander zu koppeln. Dadurch lässt sich beispielsweise in einer Anwendung als Flachkollektor auf Gebäudedächern die einfallende Sonnenstrahlung besonders effektiv und flexibel nutzen.

Diese Aufgabe wird gelöst mit einem thermoelektrischen Wandler nach Anspruch 1, sowie einem Verfahren nach Anspruch 15. Weitere Ausführungsformen der Erfindung sind in den abhängigen Ansprüchen offenbart.

Der thermoelektrische Wandler dient zur Umwandlung von Wärme und/oder Kälte oder Sonnenlicht in elektrische Energie bzw. zur Erzeugung von Wärme und Kälte und umfasst ein oder eine Mehrzahl von thermoelektrischen Wandlermodulen. Ein thermoelektrisches Wandlermodul weist wenigstens zwei räumlich begrenzte Gasvolumina auf, die durch einen unbeweglichen oder beweglichen Regenerator gasdurchlässig miteinander verbunden sind. Bei einem ersten Gasvolumen handelt es sich um ein Gasvolumen, welches beim Betrieb des thermoelektrischen Wandlers wärmer ist als die Umgebungstemperatur oder wärmer ist als ein Fluidstrom (z.B. zum Kühlen des zweiten Gasvolumens). Das erste Gasvolumen wird entweder mit Hilfe eines optischen Elementes wie beispielsweise eines Hohlspiegels oder einer Linse erwärmt, oder es wird durch thermische Ankopplung an ein Fluid, wie beispielsweise eine Kühlflüssigkeit oder ein Abgas, oder an einen Festkörper, wie beispielsweise einen Wärmeleiter aus Metall, erwärmt. Bei einem zweiten Gasvolumen handelt es sich um ein Gasvolumen, welches beim Betrieb des thermoelektrischen Wandlers kälter ist als das erste Gasvolumen. Weiter weist ein thermoelektrisches Wandlermodul wenigstens ein Volumenänderungselement, geeignet zum Ändern der Größe eines oder mehrerer genannter Gasvolumina auf.

Der thermoelektrische Wandler zeichnet sich dadurch aus, dass ein Volumenänderungselement mit Hilfe einer elektromagnetischen Komponente wie beispielsweise einem Magneten oder einer elektrisch leitfähigen Spule oder eines/mehrerer kurzgeschlossener elektrischer Leiter mittels Erzeugung eines Magnetfeldes derartig bewegt bzw. verformt werden kann, dass die Größe mindestens eines Gasvolumens geändert wird. Typischerweise werden mit Hilfe eines Volumenänderungselementes zwei Gasvolumina gleichzeitig geändert. Dabei wird normalerweise ein Gasvolumen vergrößert, während ein weiteres Gasvolumen gleichzeitig verkleinert wird. Bei der elektromagnetischen Komponente kann es sich um eine elektrisch leitfähige Spule handeln, in die durch eine Bewegung relativ zu einem Magnetfeld bzw. durch eine Magnetfeldänderung im Bereich der Spule eine Spannung induziert wird (elektromagnetische Induktion), oder die durch Anlegen einer elektrischen Spannung an die Spule relativ zum Magnetfeld bewegt werden kann. Eine bevorzugte Ausführungsform ist eine Tauchspule. Weiter kann die elektromagnetische Komponente in Form eines Polysolenoidantriebs ausgeführt sein, bei dem ein durch Permanentmagneten erzeugtes, lokal variierendes Magnetfeld durch mehrere periodisch angeordnete Spulen beschleunigt oder gebremst werden kann. Weiter kann die elektromagnetische Komponente in Form eines linearen Asynchronantriebs ausgeführt sein, bei dem kurzgeschlossene elektrische Leiter mittels periodisch angeordneter Spulen beschleunigt oder gebremst werden können. Dazu wird sowohl beim Polysolenoidantrieb als auch beim linearen Asynchronantrieb durch die Spulen ein wanderndes Magnetwechselfeld mit definierter Frequenz und Wandergeschwindigkeit erzeugt.

Weiter zeichnet sich der thermoelektrische Wandler durch einen ersten Fluidstrombereich für einen ersten Fluidstrom zum Ableiten von Wärme aus, wobei das oben genannte zweite Gasvolumen des thermoelektrischen Wandlermoduls oder die oben genannten zweiten Gasvolumina der jeweiligen thermoelektrischen Wandlermodule an diesen ersten Fluidstrom thermisch gekoppelt sind. Die Temperatur des Fluidstroms kann durch Variation der Fließgeschwindigkeit geregelt werden. Alternativ ist auch ein thermoelektrischer Wandler möglich, bei dem thermoelektrische Wandlermodule zumindest teilweise nicht miteinander über einen Fluidstrom thermisch miteinander gekoppelt sind, oder bei dem Gruppen (z. B. Reihen) von thermoelektrischen Wandlermodulen jeweils an einen separaten Fluidstrom gekoppelt sind.

Als Volumenänderungselement ist ein verschiebbarer Kolben, ein Rotationskolben, ein Drehkolben, eine Gasfeder, eine bewegliche bzw. verformbare Membran oder ein beweglicher Regenerator möglich. Für den Fall, dass ein thermoelektrisches Wandlermodul mehr als ein Volumenänderungselement umfasst, können auch Kombinationen der oben genannten Möglichkeiten zum Einsatz kommen.

Der thermoelektrische Wandler kann mindestens drei mal drei oder vier mal vier oder mindestens fünf mal fünf thermoelektrische Wandlermodule umfassen. Alternativ kann ein thermoelektrische Wandler x mal y thermoelektrische Wandlermodule umfassen, wobei 1 ≤ x ≤ 3, 8, 16 oder 100 und mit 1 ≤ y ≤ 3, 8, 16 oder 100 erfüllt ist. Typischerweise sind die thermoelektrischen Wandlermodule in einer Fläche angeordnet. Es ist jedoch auch möglich, thermoelektrische Wandlermodule schichtartig übereinander oder in einer Reihe anzuordnen. Weiter kann sich der thermoelektrische Wandler dadurch auszeichnen, dass die Mehrzahl der thermoelektrischen Wandlermodule an eine Oberfläche anpassbar ausgebildet sind bzw. die thermoelektrischen Wandlermodule relativ zueinander beweglich sind. Dadurch lässt sich der thermoelektrische Wandler beispielsweise als Kühldecke verwenden.

Weiter kann der thermoelektrische Wandler einen zweiten Fluidstrombereich für einen zweiten Fluidstrom zum Ableiten von Kälte umfassen. An den zweiten Fluidstrom sind die jeweiligen dritten Gasvolumina der entsprechenden thermoelektrischen Wandlermodule thermisch gekoppelt. Ein drittes Gasvolumen eines thermoelektrischen Wandlermoduls ist dadurch definiert, dass beim Betrieb des thermoelektrischen Wandlers dieses dritte Gasvolumen kälter oder wärmer ist als das entsprechende zweite Gasvolumen eines thermoelektrischen Wandlermoduls und vorzugsweise auch kälter oder wärmer als die Umgebungstemperatur. In einer bevorzugten Ausführungsform der Erfindung sind der erste Fluidstrom und der zweite Fluidstrom gegenläufig, so dass bei einem ersten thermoelektrischen Wandlermodul beide Fluidströme maximale Temperaturen aufweisen und bei einem letzten thermoelektrischen Wandlermodul beide Fluidströme minimale Temperaturen aufweisen. Mit Hilfe des Gegenstromprinzips wird erreicht, dass die Temperaturdifferenz zwischen warm und kalt bei jedem thermoelektrischen Wandlermodul möglichst klein ist, um einen hohen Wirkungsgrad und damit eine effektive Arbeitsweise jedes thermoelektrischen Wandlermoduls bei der Anwendung als Wärmepumpe gewährleisten zu können.

Weiter kann ein thermoelektrisches Wandlermodul ein Bewegungsbegrenzungselement zur Begrenzung der Bewegung des jeweiligen Volumenänderungselementes umfassen. Bei einem Bewegungsbegrenzungselement kann es sich beispielsweise um eine Feder, eine Gasfeder, einen Anschlag, ein magnetisches Element oder um ein elektronisches Element zur Steuerung der elektromagnetischen Komponente handeln. Alternativ können auch die Volumenbegrenzungselemente gegenseitig als Bewegungsbegrenzungselemente dienen, beispielsweise durch magnetische Abstoßung. Ein Bewegungsbegrenzungselement kann die Bewegung des jeweiligen Volumenänderungselementes derart beschränken, dass das Volumenänderungselement eine Schwingung ausführen kann, die von einer Sinusform abweicht. Um den Wirkungsgrad eines thermoelektrischen Wandlermoduls zu optimieren, wird eine Schwingung bevorzugt, welche eine annähernd rechteckige Form aufweist. Das Bewegungsbegrenzungselement kann also dazu beitragen, dass die Schwingungsform im maximalen bzw. minimalen Auslenkungsbereich (annähernd) flach ist.

Bei einem thermoelektrischen Wandlermodul kann es sich um ein Stirlingmodul, um ein Duplexstirlingmodul, um ein doppelt oder mehrfach wirkendes Stirlingmodul, um ein Vuilleumiermodul oder um ein einfach, doppelt oder mehrfach wirkendes Vuilleumiermodul handeln. Ein thermoelektrischer Wandler kann entweder nur eine Art von Wandlermodulen umfassen oder kann auch beliebige Kombinationen verschiedenartiger Wandlermodule umfassen. Mit Hilfe eines thermoelektrischen Wandlers kann elektrischer Strom, mechanische Arbeit, Wärme, Kälte oder eine beliebige Kombination der vorgenannten Möglichkeiten erzeugt werden.

Bei einem doppelt wirkenden thermoelektrischen Wandler ist mindestens ein Volumenänderungselement oder ein Gasvolumen so vorgesehen, dass es bei zwei (ansonsten unabhängigen) Prozessen mitwirkt, z.B. bei einem Stirlingprozess oder einem Vuilleumierprozess. Ein Volumenänderungselement eines thermoelektrischen Wandlermoduls bildet hierbei gleichzeitig ein Volumenänderungselement eines weiteren thermoelektrischen Wandlermoduls, oder ein Gasvolumen ist gleichzeitig Bestandteil von zwei thermoelektrischen Wandlermodulen. Bei einem mehrfach wirkenden Wandler weist mindestens ein thermoelektrisches Wandlermodul ein erstes gemeinsames Volumenänderungselement mit einem ersten weiteren thermoelektrischen Wandlermodule auf und eine zweites gemeinsames Volumenänderungselement mit einem zweiten weiteren thermoelektrischen Wandlermodul, oder ein erstes Gasvolumen wird von einem ersten und einem zweiten thermoelektrischen Wandlermodul verwendet und ein zweites Gasvolumen wird von dem ersten und einem dritten thermoelektrischen Wandlermodul verwendet.

In einer bevorzugten Ausführungsform der Erfindung sind, für den Fall dass der thermoelektrische Wandler eine Mehrzahl von thermoelektrischen Wandlermodulen umfasst, die thermoelektrischen Wandlermodule mittels elektromagnetischer Komponenten über einen Mehrphasenstrom gekoppelt. Die Phasendifferenzen zwischen zwei benachbarten thermoelektrischen Wandlermodulen können beispielsweise 90°, 120° oder 180° betragen. Es ist jedoch auch möglich, dass die Phasendifferenz zwischen zwei benachbarten thermoelektrischen Wandlermodulen weniger als 90° beträgt. Bei einer großen Anzahl von thermoelektrischen Wandlermodulen kann die Phasendifferenz zwischen zwei benachbarten thermoelektrischen Wandlermodulen auch antiproportional zur Anzahl der thermoelektrischen Wandlermodule gewählt sein. Weiter besteht die Möglichkeit, eine Auswahl (d.h. nicht alle) der thermoelektrischen Wandlermodule oder auch alle synchron (also ohne Phasendifferenz) zu betreiben.

In einer weiteren bevorzugten Ausführungsform der Erfindung wird die elektrische Energie, die beim Abbremsen eines Volumenänderungselements durch Induktion entsteht, dazu verwendet, ein anderes Volumenänderungselement zu beschleunigen. Weiter kann diese elektrische Energie ganz oder teilweise in einem Kondensator oder Akku zwischengespeichert werden, bevor sie wieder zur Beschleunigung eines anderen oder des selben Volumenänderungselements verwendet wird.

In einer weiteren Ausführungsform der Erfindung umfasst der thermoelektrische Wandler eine Steuerung zur Regelung der Schwingungsfrequenz, Amplitude und Schwingungsform eines jeden Volumenänderungselementes der thermoelektrischen Wandlermodule, sowie zur Regelung der Phasenverschiebung zwischen den Volumenänderungselementen eines thermoelektrischen Wandermoduls und zwischen den verschiedenen thermoelektrischen Wandermodulen. Die Schwingungsfrequenz, Amplitude, Schwingungsform und Phasenverschiebung eines jeden Volumenänderungselements wird mit Hilfe der jeweiligen elektromagnetischen Komponente der thermoelektrischen Wandlermodule geregelt. Dazu werden durch ein Steuergerät die Ströme in den elektromagnetischen Komponenten derart gesteuert oder geregelt, dass die Volumenänderungselemente jeweils derart gebremst oder beschleunigt werden, dass sie die gewünschte Schwingungsform ausüben. Beim Bremsen geben sie dabei Energie an die elektromagnetischen Komponenten ab, beim Beschleunigen wird ihnen von den elektromagnetischen Komponenten Energie zugeführt. Weiter oder alternativ kann der thermoelektrische Wandler eine Vorrichtung zur Umwandlung der von den thermoelektrischen Wandlermodulen zugeführten bzw. abgeführten Energie in eine andere Form der elektrischen Energie wie beispielsweise Wechselstrom mit einer vordefinierten Frequenz umfassen. Des Weiteren ist es möglich, mit Hilfe einer Steuerung zu bestimmen, ob der thermoelektrische Wandler bevorzugt elektrische Energie oder bevorzugt Wärme und/oder Kälte erzeugen soll. Mit Hilfe der Steuerung kann sodann der Anteil der elektrischen Energieerzeugung bzw. der Anteil der Wärme- und/oder Kälteerzeugung festgelegt werden.

In einer weiteren Ausführungsform der Erfindung wird austretendes Licht aus einem oder mehreren optischen Element(en) mittels Lichtleiter, wie z. B. einer Glasfaser, an eines der ersten Gasvolumina weitergeleitet. In ein erstes Gasvolumen einfallendes Licht wird mit Hilfe eines Lichtabsorbers in Wärme umgewandelt. Bevorzugterweise befindet sich der Lichtabsorber im Brennpunkt bzw. Fokus des einfallenden Lichts. Bevorzugterweise wird ein erstes Gasvolumen zumindest teilweise von einer wärmeisolierenden Schicht umgeben, so dass dieses Gasvolumen mit Hilfe des einfallenden Lichts und des Absorbers leicht aufgeheizt werden kann. Die Schicht ist in dem Bereich, in das Licht in das Gasvolumen eintritt, ist vorzugsweise für Licht transparent und gleichzeitig wärmeisolierend. Dies kann beispielsweise durch eine doppelwandige Glashülle erreicht werden, die evakuiert ist.

Volumenänderungselemente des thermoelektrischen Wandlers können auch lose Kolben sein, die nur mit Hilfe von Druckunterschieden in den entsprechenden Gasvolumina und/oder Gasfedern bzw. mit Hilfe von elektromagnetischen Feldern bewegt werden. Lose Kolben werden nicht mit Hilfe eines mechanischen Gestänges bewegt bzw. in Position gehalten, so dass im Fall von losen Kolben ein geringerer Konstruktionsaufwand notwendig ist als im Fall von mechanisch bewegten Kolben. Lose Kolben werden innerhalb eines Zylinders mit kreisförmiger oder beliebiger anderer Grundfläche bewegt und von der Zylinderwand geführt. Lose Kolben können jedoch auch Bereiche mit unterschiedlichen Durchmessern/unterschiedlichen Grundflächen aufweisen und entsprechend in Zylindern mit Bereichen unterschiedlicher Grundflächen bewegt werden. Außerdem können sie Bereiche enthalten, die nur zum Führen des Kolbens dienen oder Bereiche, die dazu dienen eine Gasfeder zu bilden. Lose Kolben können über eine Verbindung mit dem Zylinder verfügen, die dazu geeignet ist, elektrischen Strom zu übertragen, beispielsweise ein mehradriger elektrischer Leiter. Lose Kolben sind jedoch nicht mittels einer mechanischen Feder derart mit dem Zylinder verbunden, dass die Feder eine Kraft auf den losen Kolben ausübt oder dass die rücktreibende Kraft der mechanischen Feder hin zum Mittelpunkt der Schwingungsbewegung größer als die rücktreibende Kraft durch komprimierte oder expandierte Gasvolumina innerhalb des Zylinders sind (gemittelt über den gesamten Weg des Kolbens). Weiter ist es möglich, dass die elektromagnetische Komponente (z. B. Spule) zur Bewegung eines Volumenänderungselementes gleichzeitig als Regenerator dient, was ebenfalls eine konstruktive Vereinfachung darstellt.

Weiter kann sich der thermoelektrische Wandler dadurch auszeichnen, dass das Volumenänderungselement eine Schwingung ausführen kann, deren Schwingungsfrequenz sich um mindestens 10%, 25%, 50% oder 75% von der Eigenfrequenz eines entsprechenden nicht durch elektromagnetische Komponente gekoppelten Volumenänderungselements unterscheidet. Weiter kann sich auch die Wellenform einer solchen Schwingung von einer ungekoppelten Schwingung unterscheiden. Daher ist ein thermoelektrischer Wandler möglich, bei dem das Volumenänderungselement eine Schwingung ausführen kann, die annähernd rechteckförmig und/oder trapezförmig ist. Solch eine Schwingung lässt sich auch dadurch definieren, dass das Volumenänderungselement Schwingungen ausführen kann, deren Wellenform eine Steigung in den Wendepunkten aufweist, die sich von der Steigung in den Wendepunkten einer entsprechenden Sinuswellenform mit gleicher Wellenlänge und Amplitude um mindestens 10%, 20%, 30% oder 50% unterscheidet. Der Wendepunkt ist der Zeitpunkt, bei dem die Krümmung (mathematisch die 2. Ableitung) der Funktion Auslenkung über Zeit ihr Vorzeichen wechselt. Bevorzugt ist letztgenannter Unterschied derart, dass der Absolutwert besagter Steigung vorzugsweise größer ist als der entsprechende Absolutwert einer Steigung einer Sinuswellenform mit gleicher Wellenlänge und Amplitude. Solch eine Abweichung der Schwingungswellenform des Volumenänderungselements gemäß dieser Erfindung führt im Vergleich zu thermoelektrischen Wandlern, die typischerweise Sinusschwingungen ausführen, zu einem verbesserten Wirkungsgrad.

Damit die Volumenänderungselemente eine annähernd rechteck- oder trapezförmige Schwingungsform durchführen können, werden die elektromagnetischen Komponenten, die Bewegungsbegrenzungselemente, der Gasdruck, Federn, Gewichtskraft und/oder Gasfedern derart dimensioniert bzw. gesteuert/geregelt, dass auf die Volumenänderungselemente während einer Halbschwingung (oder zwischen zwei Durchgängen durch den Bewegungsmittelpunkt) jeweils mindestens zwei lokale Beschleunigungsmaxima wirken (bezogen auf die Funktion Beschleunigung über Zeit). Diese Beschleunigungsmaxima dienen einerseits zum Bremsen, andererseits zur Erhöhung der Geschwindigkeit des Volumenänderungselements.

In einer weiteren Ausführungsform der Erfindung umfasst der thermoelektrische Wandler Vuilleumiermodule, die einen Verdrängerkolben mit unbeweglichem Regenerator und einem beweglichen Regenerator umfassen. Alternativ kann ein Vuilleumiermodul auch zwei bewegliche Regeneratoren umfassen oder zwei Verdrängerkolben mit zwei unbeweglichen Regeneratoren. Weiter kann es sich bei den thermoelektrischen Wandlermodulen des thermoelektrischen Wandlers auch um doppelt oder mehrfach wirkende Vuilleumiermodule handeln, wobei jedem Vuilleumiermodul drei Gasvolumina mit jeweils unterschiedlichen Temperaturbereichen zugeordnet sind. In einer bevorzugten Ausführungsform sind jeweils zwei, vier oder mehr als vier Vuilleumiermodule so angeordnet, dass ein Volumenänderungselement eines ersten Vuilleumiermoduls, das dessen erste und zweite Gasvolumina verändern kann, mit einem weiteren Volumenänderungselement eines zweiten Vuilleumiermoduls derart mechanisch gekoppelt, dass beide Volumenänderungselemente mittels der selben elektromagnetischen Komponenten beschleunigt und gebremst werden können. Gleiches gilt für jedes weitere Vuilleumiermodul und das jeweils darauffolgende Vuilleumiermodul, wobei das Volumenänderungselement zwischen den ersten und zweiten Gasvolumina des letzten Vuilleumiermoduls wiederum mit einem Volumenänderungselement des ersten Vuilleumiermoduls mechanisch gekoppelt ist.

In einer beispielhaften Ausführungsform sind die Vuilleumiermodule so aneinandergekoppelt, dass es Gasvolumina mit den wärmsten und mit den kältesten Temperaturbereichen gibt, die jeweils zwei benachbarten Vuilleumiermodulen zugeordnet sind, wobei sich zwischen zwei benachbarten Gasvolumina je ein beweglicher Regenerator befindet und wobei die beweglichen Regeneratoren mittels elektromagnetischer Komponenten aneinandergekoppelt sind. In einer weiteren beispielhaften Ausführungsform sind jeweils drei Gasvolumina über Regeneratoren gekoppelt, wobei jedes der drei Gasvolumina durch je einen Verdrängerkolben in zwei Bereiche unterteilt ist, und wobei die drei Verdrängerkolben mittels elektromagnetischer Komponenten aneinandergekoppelt sind. In einer weiteren beispielhaften Ausführungsform sind jeweils drei Gasvolumina über Regeneratoren gekoppelt, wobei jedes der drei Gasvolumina durch mehrere Verdrängerkolben in mehr als zwei Bereiche unterteilt ist, und wobei die Verdrängerkolben mittels elektromagnetischer Komponenten aneinandergekoppelt sind. In allen drei Fällen erlaubt die Kopplung mittels elektromagnetischer Komponenten, dass die Volumenänderungselemente (bewegliche Regeneratoren oder Verdrängerkolben) mit festgelegten Phasenverschiebungen relativ zueinander bewegt werden können. In allen drei Fällen können die Phasenverschiebungen derart gewählt werden, dass der Wirkungsgrad des entsprechenden thermoelektrischen Wandlers maximiert wird, oder dass sogar neben Wärme und Kälte auch elektrische Energie erzeugt wird. Weiter besteht die Möglichkeit die Phasenverschiebungen der beweglichen Regeneratoren oder Verdrängerkolben der unterschiedlichen Gasvolumina so zu wählen, dass neben Wärme und/oder Kälte auch elektrische Energie erzeugt wird.

Weiter ist es möglich einen thermoelektrischen Wandler unter Zufuhr von elektrischer (bzw. mechanischer) Energie als Wärmepumpe (für die Erzeugung von Wärme und/oder Kälte) zu verwenden. Bei dem Betrieb als Wärmepumpe werden die Volumenänderungselemente beispielsweise durch von außen dem thermoelektrischen Wandler zugeführter elektrischer Energie (durch Erzeugung von sich zeitlich ändernden Magnetfeldern) bewegt.

Des Weiteren betrifft die Erfindung ein Verfahren des thermoelektrischen Wandlers. Zunächst wird der thermoelektrische Wandler so angeordnet, dass er Licht (typischerweise Sonnenlicht) und/oder Wärme und/oder Kälte ausgesetzt ist. Mit Hilfe des Lichts oder der Wärme werden die jeweiligen ersten Gasvolumina der thermoelektrischen Wandlermodule erwärmt. Sodann erzeugt der thermoelektrische Wandler elektrischen Strom und/oder mechanische Arbeit und/oder Wärme und/oder Kälte. Mit Hilfe von geeigneten Steuermitteln (z. B. durch Änderung der Phasenverschiebung der Volumenänderungselemente innerhalb der thermoelektrischen Wandlermodule) ist es möglich, die Anteile von elektrischem Strom, mechanischer Arbeit und Wärme und Kälte festzulegen. So ist es beispielsweise möglich, den thermoelektrischen Wandler so zu betreiben, dass dieser ausschließlich elektrischen Strom und Abwärme erzeugt oder dass dieser ausschließlich Wärme und Kälte erzeugt. Alternativ oder zusätzlich zur Erzeugung von elektrischem Strom kann auch mechanische Arbeit erzeugt werden. Wird der thermoelektrische Wandler mit Kälte betrieben, so wird diese an die jeweils dritten Gasvolumina gekoppelt, so dass Wärmeenergie von den an die jeweiligen zweiten Gasvolumina gekoppelten Fluiden zu den an die jeweiligen ersten Gasvolumina gekoppelten Fluiden gepumpt wird.

Weiter betrifft das Verfahren die Regelung der Temperatur des Fluidstromes mit Hilfe der Fließgeschwindigkeit des Fluidstromes. Das heißt, je langsamer ein Fluid an den entsprechenden Gasvolumina vorbeiströmt, desto mehr nimmt der Fluidstrom die Temperatur der Gasvolumina an, und je schneller ein Fluid an den entsprechenden Gasvolumina vorbeiströmt, desto eher behält der Fluidstrom seine Temperatur bei. Eine langsame Fließgeschwindigkeit ist beispielsweise dann sinnvoll, wenn das Fluid möglichst die Temperatur der entsprechenden Gasvolumina annehmen soll, wie es bei der Nutzung der erzeugten Wärme bzw. Kälte der Fall ist. Dient der Fluidstrom ausschließlich zur Kühlung der entsprechenden Gasvolumina, so ist eine hohe Fließgeschwindigkeit vorteilhaft, da in diesem Falle die Kühlwirkung des Fluids größer ist als bei einem langsam strömenden Fluid.

Weiter betrifft die Erfindung ein Verfahren, bei dem der thermoelektrische Wandler der Temperaturdifferenz zwischen einerseits der Umgebungstemperatur und andererseits einem Wärmespeicher, Kältespeicher, einem an das Erdreich thermisch gekoppelten Fluid, einem durch Licht erwärmten Fluid oder Wärmeleiter (z.B. aus Metall) oder einem Erzeuger von Abwärme ausgesetzt wird, um so ein Gebäude, ein Kraftfahrzeug einen Wärmespeicher oder einen Kältespeicher aufzuwärmen oder zu kühlen. Gleichermaßen kann der thermoelektrische Wandler dazu verwendet werden, dem Wärmespeicher Wärme und/oder dem Kältespeicher Kälte zuzufügen. Dabei kann die Umgebungstemperatur wärmer oder kälter als die andere zum Betrieb des thermoelektrischen Wandlers verwendete Wärmequelle/- senke sein. Ein Wärmespeicher kann beispielsweise ein Latentwärmespeicher oder ein Warmwassertank sein, ein Kältespeicher kann beispielsweise ein Tank mit flüssigem Stickstoff sein.

Ein Verdrängerkolben und ein daneben befindliches Gasvolumen und/oder eine Feder und/oder eine Gasfeder können als ein mechanischer Schwinger aufgefasst werden, der eine Eigenfrequenz aufweist, die einerseits durch die Kompressibilität des Gases in dem Gasvolumen sowie die Summe der übrigen Kräfte, die auf den Kolben wirken, und die Masse des Verdrängerkolbens bzw. einer daran gekoppelten Masse definiert sind. Der Betrieb des thermoelektrischen Wandlers erfolgt jedoch so, dass er bevorzugt außerhalb des Bereichs der Eigenfrequenz schwingt. Dies wird z.B. durch die elektromagnetische Kopplung der verschiedenen Komponenten wie etwa eines Verdrängerkolbens und/oder Regenerators erreicht, die eine Oszillationsfrequenz eines Verdrängerkolbens und/oder eines Regenerators definiert. Die durch die Masse eines beweglichen Kolbens oder Regenerators und durch mechanische Rückstellkräfte wie Federkraft, Druckkraft durch ein komprimiertes Gas sowie mechanische Dämpfung definierte Eigenfrequenz eines Kolbens bzw. beweglichen Regenerators und dessen durch eine elektromagnetische Kopplung veränderte bzw. tatsächliche Arbeitsfrequenz können signifikant (z. B. mehr als 10%, mehr als 50%, mehr als 100%, mehr als das Zehnfache, oder mehr als das Hundertfache) voneinander abweichen. Der Betrieb außerhalb der mechanisch definierten Eigenfrequenz erlaubt sehr niedrige Massen z. B. eines Verdrängerkolbens, da dieser nicht Energie in Form von kinetischer Energie zwischenspeichern muss (dies jedoch kann). Die Energiespeicherung kann vielmehr (zusätzlich) durch die elektrische Energie oder durch Kopplung an andere Kolben erfolgen. Weiterhin ist bei der vorliegenden Erfindung ein Betrieb bei verschiedenen Frequenzen möglich, was eine breite Anwendbarkeit hinsichtlich umzuwandelnder Energiemengen bedeutet, ohne dabei den Wirkungsgrad deutlich zu verschlechtern. Damit unterscheidet sich die vorliegende Erfindung von herkömmlichen Freikolbenstirling- oder -vuilleumiermaschinen, die die Energie zwischen Expansion und Kompression bzw. zwischen Vergrößerung und Verkleinerung der Arbeitsräume großteils in Form von kinetischer Energie der Kolbenbewegungen zwischenspeichern und so auf den Betrieb bei einer bestimmten Eigenfrequenz festgelegt sind.

Beim Ableiten oder Abführen von Wärme durch einen Fluidstrom nimmt der Fluidstrom durch den Kontakt mit einem thermoelektrischen Wandlermodul über den Wärmetauscher eine erhöhte Temperatur an, d.h. der Fluidstrom nimmt Wärmeenergie von dem Modul auf. Dies entspricht der Erzeugung von Wärme, da der aufgewärmte Fluidstrom als Wärmequelle (z. B. außerhalb von dem thermoelektrischen Wandler) genutzt werden kann.

Beim Ableiten oder Abführen von Kälte durch einen Fluidstrom nimmt der Fluidstrom durch den Kontakt mit einem thermoelektrischen Wandlermodul eine erniedrigte Temperatur an, d.h. der Fluidstrom gibt Wärmeenergie an das Modul ab. Dies entspricht der Erzeugung von Kälte, da der abgekühlte Fluidstrom als Kältequelle genutzt (z. B. außerhalb von dem thermoelektrischen Wandler) werden kann.

Ein weiterer Aspekt der Erfindung ist die Verwendung einer oder mehrere sich verjüngender Spulen, die als Indiktionsbremsen oder Induktionsbeschleuniger auf Kolben wirken. Dabei wird die kinetische Energie eines Kolbens in elektrische Energie umgewandelt. Unter einer sich verjüngenden Spule versteht man eine Spule mit variabler Wicklungsdichte (d.h. die Wicklungsdichte nimmt zu dem verjüngten Ende hin ab). Mit Hilfe von sich verjüngenden Spulen kann die Geschwindigkeit eines Kolbens besser berücksichtigt werden: Ein schneller Kolben erzeugt zunächst nur eine Induktionsspannung durch Wechselwirkung mit dem verjüngten Ende der Spule. Je größer der Überlapp eines Kolbens mit einer Spule wird desto größer wird die Wicklungsdichte und somit auch die Bremswirkung, d.h. um so langsamer wird die Kolbenbewegung. Durch die zunehmende Wicklungsdichte einer Spule bei größerem Überlapp eines Kolbens mit einer Spule kann erreicht werden, dass die erzeugte Induktionsspannung auch bei relativ langsamen Kolbenbewegungen (im Vergleich zu ungebremsten Kolbenbewegungen) ein ähnlich hohes Niveau erreichen kann wie bei einem entsprechend schnelleren Kolben (mit weniger Überlapp). Außerdem hat die höhere Wicklungsdichte einer Spule im Bereich des maximalen Überlapps mit einem entsprechenden Kolben die Wirkung, dass der Kolben in besagtem Bereich mit maximalem Überlapp stark (bis zum momentanen Stillstand des Kolbens) abgebremst werden kann.

Weitere Aspekte von bevorzugten und möglichen Ausführungsformen der Erfindung werden anhand der Figuren 1 bis 20 deutlich. Dabei zeigt:
- Figur 1: einen Flachkollektor mit Vuilleumiermodulen;
- Figur 2: Stirlingmodule, welche anstelle der Vuilleumiermodule in Figur 1 eingesetzt wer- den können;
- Figur 3: Duplexstirlingmodule, die anstelle der Vuilleumiermodule in Figur 1 eingesetzt werden können;
- Figur 4: einen thermoelektrischen Wandler für die Anwendung als Solaranlage;
- Figur 5: konstruktive Details für Absorber und Bewegungsbegrenzungselemente;
- Figur 6: Wirkung eines Bewegungsbegrenzungselements anhand zeitlicher Verläufe von
a) Strom bzw. Kraft,
b) Kraft und
c) Strom;
- Figur 7: eine flexibel aufgebaute Wärmepumpe bzw. Wärmekraftmaschine;
- Figur 8: Nachführungsvorrichtungen für Sonnenlicht für
a) Hohlspiegel und
b) Linsen;
- Figur 9: doppelt oder mehrfach wirkende Vuilleumiermaschinen, nämlich
a) gekoppelte Vuilleumiermaschine und
b) doppelt wirkende Vuilleumiermaschine
c) mehrfach wirkende Vuilleumiermaschine;
- Figur 10: einen Hohlspiegel;
- Figur 11: eine Vuilleumiermaschine mit Gasfedern und Hohlspiegel;
- Figur 12: eine Vuilleumiermaschine mit Gasfedern;
- Figur 13: eine Vuilleumiermaschine mit Gasfedern;
- Figur 14: einen thermoelektrischen Wandler mit optionalem Zylinder;
- Figur 15: eine zweifach- oder mehrfachwirkende Vuilleumiermaschine;
- Figur 16: einen Duplex-Stirling;
- Figur 17: eine Vuilleumiermaschine mit Membranen;
- Figur 18: einen flachen, modularen Stirling;
- Figur 19: eine Darstellung von Kolbenschwingungsformen; und
- Figur 20: eine Darstellung des Gegenstromprinzips.

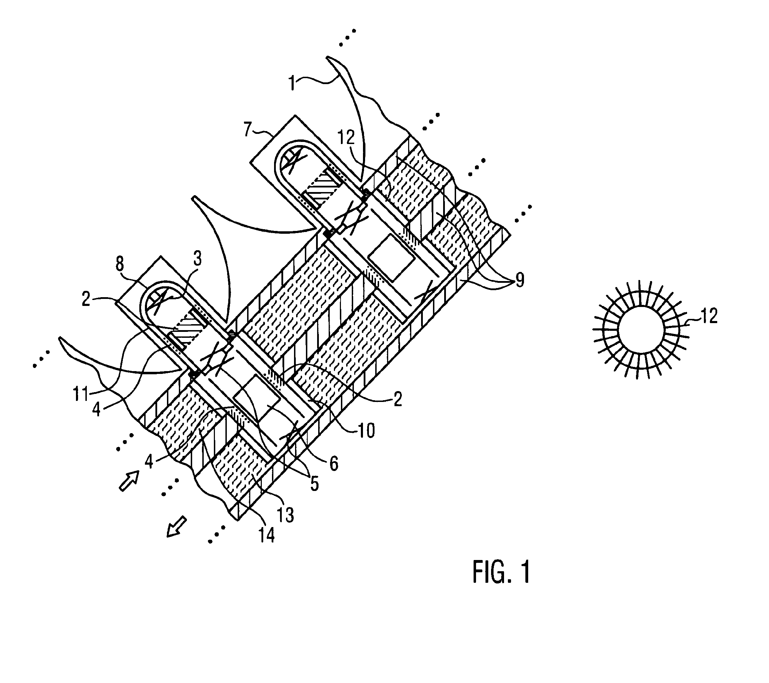

In Figur 1 wird ein thermoelektrischer Wandler gezeigt, der als Flachkollektor mit Vuilleumiermodulen ausgebildet ist. Das obere Ende eines jeden Vuilleumiermoduls wird mit Hilfe eines Hohlspiegels 1 beheizt, indem einfallendes Licht durch den Hohlspiegel 1 auf einen Absorber 3, der als Bewegungsbegrenzungselement auch noch eine Feder umfassen kann, fokussiert, wodurch Wärme entsteht. Zur besseren Speicherung der Wärme wird dieser obere Teil eines Vuilleumiermoduls von einem Vakuum 8 umgeben. Dieses Vakuum 8 befindet sich typischerweise zwischen zwei Wänden aus lichtdurchlässigem Material wie etwa Glas (solche Wände sind deshalb vorteilhaft, damit das einfallende Licht möglichst ungehindert auf den Absorber 3 treffen kann). Statt einer Heizung mit Licht kann auch eine Aufheizung durch thermischen Kontakt mit einem Fluid wie einem Gas oder einer Flüssigkeit vorgesehen sein. Eine solche Aufheizmöglichkeit durch Kontakt mit dem Fluid kann auch zusätzlich zu einer Lichtheizung vorgesehen sein. Das Fluid zum Aufheizen kann z. B. ein Abgas aus einem Motor, oder Kühlwasser aus einem Kühlkreislauf sein, beispielsweise von einem Motor eines Kraftfahrzeugs. Weiter umfasst jedes Vuilleumiermodul zwei Spulen 4. Diese dienen dazu, um einen beweglichen Regenerator 2 oder um einen Verdrängerkolben 6 bewegen zu können bzw. um durch Bewegungen des Regenerators 2 oder des Verdrängerkolbens 6 mittels elektromagnetischer Induktion Bewegungsenergie in elektrische Energie umzuwandeln. Der Verdrängerkolben 6 verdrängt Gas aus dem darüberliegenden Gasvolumen bzw. aus dem darunterliegenden Gasvolumen, so dass Gas von einem Volumen in das entsprechende andere Volumen strömt. Bei diesem Vorgang strömt das verdrängte Gas durch den feststehenden (nicht beweglichen) Regenerator 2, welcher dabei Wärme vom durchströmenden Gas aufnimmt bzw. Wärme an das durchströmende Gas abgibt. Die Bewegungen des beweglichen Regenerators 2 und des Verdrängerkolbens 6 werden durch Bewegungsbegrenzungselemente 5 (z. B. Federn) begrenzt. In einer alternativen Ausführungsform könnten auch bewegliche Regeneratoren und Verdrängerkolben mittels Federn am Bewegungsbegrenzungselemente oder Absorber gekoppelt sein, z.B. zum Entgegenwirken der Schwerkraft in einem vertikalen Aufbau. Wohingegen der obere Bereich 11 eines Vuilleumiermoduls eine schlechte Wärmeleitfähigkeit aufweist, so weist der untere Bereich 10 eines Vuilleumiermoduls eine gute Wärmeleitfähigkeit auf (Teile des unteren Bereichs 10 können beispielsweise aus Aluminium gefertigt sein). Der untere Teil eines Vuilleumiermoduls ist thermisch an zwei Fluidströme gekoppelt, wobei der Fluidstrom für Wärmetransport 14 und der Fluidstrom für Kältetransport 13 gegenläufig sind (durch Pfeile gekennzeichnet). Jedes Vuilleumiermodul weist drei Volumina mit unterschiedlichen Temperaturbereichen auf. Dem obersten Volumen mit Absorber 3 wird Energie in Form von Licht zugeführt, so dass dieses Volumen das wärmste der drei Volumina ist. Im mittleren Volumen zwischen Regenerator 2 und Verdrängerkolben 6 wird dem Vuilleumiermodul Wärme entzogen, da hier Wärme an den Fluidstrom 14 abgegeben wird. Im untersten Volumen (unterhalb dem Verdrängerkolben 6) wird Kälte erzeugt, die durch den Fluidstrom 13 aufgenommen und abtransportiert wird. Die verschieden warmen Bereiche aller Vuilleumiermodule bzw. Fluidströme werden durch Isolierungen 9 thermisch voneinander abgetrennt. Weiter kann jedes Vuilleumiermodul ein oder zwei Elemente mit Wärmetauscherflügeln 12 für ein effizienteres Weiterleiten von Wärme bzw. Kälte an den entsprechenden Fluidstrom umfassen. Es besteht auch die Möglichkeit, dass ein Hohlspiegel 1 eine Aussparung 7 umfasst, so dass der Hohlspiegel 1 relativ zu dem zugeordneten Vuilleumiermodul bewegt werden kann. Dadurch ist es möglich, dass der Hohlspiegel 1 bewegt werden kann, um z. B. den Hohlspiegel 1 so ausrichten zu können, damit dieser möglichst effizient Sonnenlicht einfangen kann.

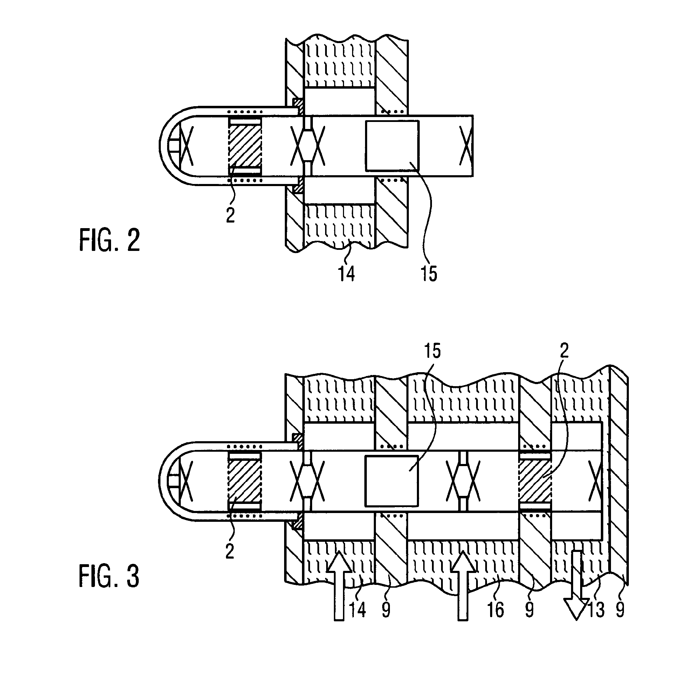

Alternativ zu den Vuilleumiermodulen können im Flachkollektor aus Figur 1 auch Stirlingmodule oder Duplexstirlingmodule zum Einsatz kommen, welche in den Figuren 2 und 3 abgebildet sind. Bei dem Stirlingmodul aus Figur 2 kommen zwei Volumenänderungselemente zum Einsatz, nämlich ein beweglicher Regenerator 2 und ein Arbeitskolben 15. Im Fall des Duplexstirlingmoduls von Figur 3 werden zwei bewegliche Regeneratoren 2 und ein beweglicher Arbeitskolben 15 verwendet. In diesem Fall werden drei Fluidströme benötigt, nämlich Fluidstrom 13 für Kältetransport, Fluidstrom 14 für Wärmetransport und ein weiterer Fluidstrom 16 für Wärmetransport. Die Fließrichtungen der Fluidströme 14 und 16 sind in gleicher Richtung, wogegen der Fluidstrom 13 in entgegengesetzter Richtung zu den Fluidströmen 14 bzw. 16 fließt (die Fließrichtungen sind durch Pfeile gekennzeichnet). Weiter sind thermoelektrische Wandler möglich, bei denen Kombinationen der verschiedenen thermoelektrischen Wandlermodule zum Einsatz kommen (z. B. Vuilleumiermodule und Stirlingmodule und Duplexstirlingmodule).

Die Volumenänderungselemente 2, 6 und 15 sind mittels elektromagnetischen Komponenten 4 (Spulen) aneinander gekoppelt, so dass die Bewegungen der Volumenänderungselemente 2, 6 und 15 miteinander durch entsprechende Phasenverschiebungen korreliert sind. Es besteht die Möglichkeit, die Phasenverschiebungen zwischen Volumenänderungselementen 2, 6 und 15 eines thermoelektrischen Wandlermoduls oder auch mehrerer thermoelektrischer Wandlermodule mit Hilfe einer Steuerung zu regeln bzw. vorzugeben. Dadurch wird auch eine Oszillationsfrequenz für den Betrieb der Module erreicht, die außerhalb einer mechanisch definierten Eigenfrequenz liegt, die z.B. unter anderem durch die Masse eines Verdrängerkolbens definiert wäre.

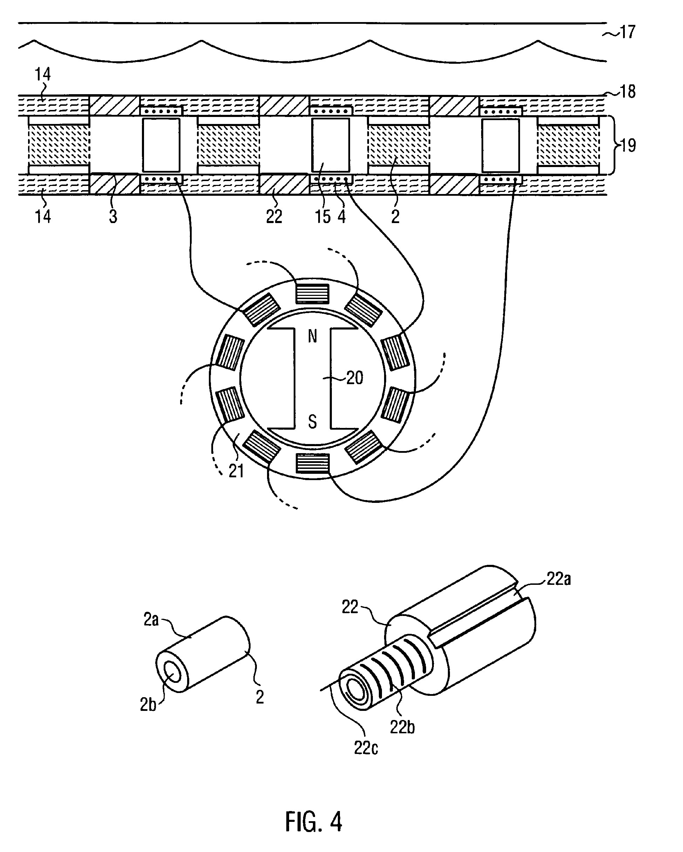

Figur 4 zeigt ein Gesamtsystem für die Anwendung eines thermoelektrischen Wandlers als Solaranlage. Gezeigt ist ein thermoelektrischer Wandler, in dem die verschiedenen Bauelemente hintereinander (z. B. in einer Röhre) angebracht sind. In einer inneren Röhre 19 sind abwechselnd unbewegliche Regeneratoren 2 und bewegliche Arbeitskolben 15 angebracht. Das Innenrohr 19 wird von einem Außenrohr 18 umgeben, wobei im Zwischenraum der Rohre 18 und 19 ein Fluidstrom 14 für den Wärmetransport eingesetzt wird. Die Wärme wird mit Hilfe eines Linsenfeldes 17 und Absorberbeschichtungen 3 erzeugt. Statt des Linsenfeldes wäre auch ein Feld an Hohlspiegeln möglich. Die Regeneratoren 2 dienen gleichzeitig als Bewegungsbegrenzungselemente für die jeweils benachbarten Arbeitskolben 15. Weiter befindet sich im Bereich eines Absorbers 3 ein Isoliermantel 22, welcher eine Nut 22a als Fluiddurchlass, eine Spule 22b (gleich Spule 4) und einen Anschluss 22c umfasst. Im Fall von Figur 4 sind die Regeneratoren 2 feststehend und umfassen einen Mantel 2a und eine Füllung 2b, wie beispielsweise Metallwolle. Die Bewegungen der Arbeitskolben 15 sind über die Spulen 2 elektromagnetisch an einem Generator, bestehend aus einem Stator 21 mit Spulen und einem Rotor 20, gekoppelt. Die Masse des Rotors ist so bemessen, dass der Rotor ausreichend Energie aus der Gasexpansion der verschiedenen Stirlingmodule zwischenspeichern kann, um damit die Gaskompression der verschiedenen Stirlingmodule zu bewirken ohne dabei seine Rotation in eine bestimmte Richtung einzustellen. Anstelle eines teilweise mechanischen Generators kann auch eine vollständige elektronische Komponente verwendet werden, um die Kopplung der Arbeitskolben zu bewirken und um elektrische Energie zu erzeugen. Diese elektronische Komponente kann weiter einen Frequenzumwandler umfassen, der den erzeugten Strom in einen Strom mit gewünschter Frequenz oder auch Gleichstrom umwandelt. Bei der in Figur 4 gezeigten Ausführungsform handelt es sich um einem mehrfach wirkenden thermoelektrischen Wandler, da die Arbeitskolben (15) jeweils Volumina benachbarter thermoelektrischer Wandlermodule verändern.

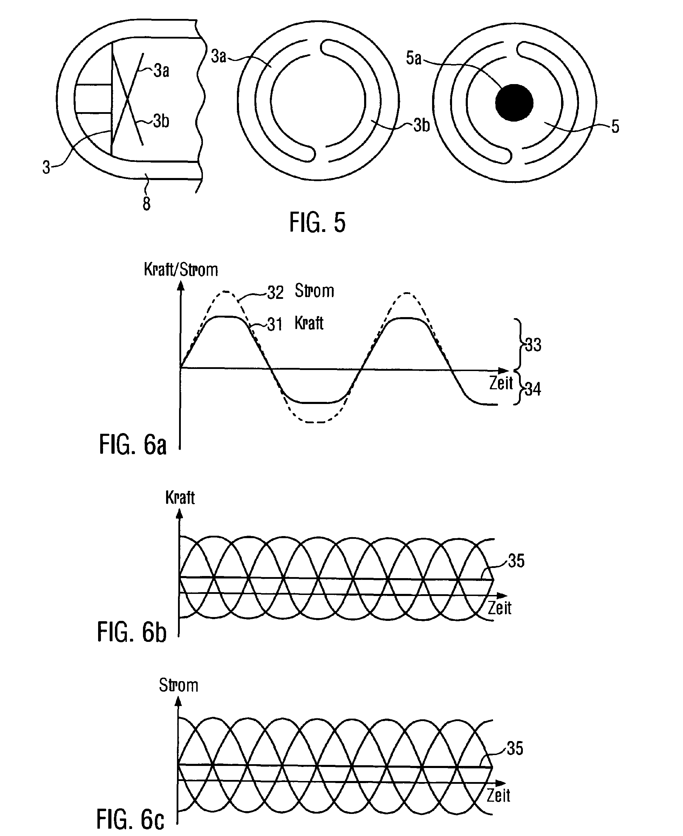

Figur 5 zeigt in größerem Detail einen Absorber 3 mit Federn 3a und 3b, die als Bewegungsbegrenzungselemente dienen. Die Federn 3a und 3b sind im Wesentlichen helixfömig. Der Absorber wird von einer wärmeisolierenden Schicht, wie z. B. einem Vakuum 8, umgeben. Reine Bewegungsbegrenzungselemente 5 (ohne Absorber 3) weisen einen Durchlass 5a auf, durch den von Volumenänderungselementen bewegtes Gas hindurchströmen kann.

Figur 6 verdeutlicht die Wirkung der Bewegungsbegrenzungselemente am Beispiel eines Arbeitskolbens eines Stirlings. Würde eine elektromagnetische Komponente wie in Fig. 2 dargestellt mit einem sinusförmigen Strom 32 beschickt, so kann sich der Verlauf 31 der auf den Kolben wirkenden Kraft als Summe der Kräfte der elektromagnetischen Komponente und des Bewegungsbegrenzungselement ergeben. In diesem Fall würde der Stirling als Wärmepumpe betrieben: Da die Summe der positiven Kräfte 33 die Summe der negativen Kräfte 34 überwiegt, wird Arbeit verrichtet, um Wärme und Kälte zu erzeugen. In den Figuren 6b und 6c werden ebenfalls Kraft- und Stromverläufe als Funktion der Zeit gezeigt, wobei jedoch Kräfte bzw. Ströme von mehreren Kolben überlagert sind. Die über die verschiedenen Module gemittelte Summe aller überlagerten Kräfte 35 ist stets positiv und im Vergleich zu einem einzelnen Modul geglättet. Im Betrieb als Wärmekraftmaschine (d.h. zum Erzeugen von elektrischer oder mechanischer Energie), kann bei einem thermoelektrischen Wandler, der aus Stirlingmodulen besteht, durch Betrieb der einzelnen Module mit Phasenverschiebungen untereinander erreicht werden, dass die Module sich gegenseitig Energie zu- oder abführen, und dass so zu keinem Zeitpunkt von außen Energie zugeführt werden muss.

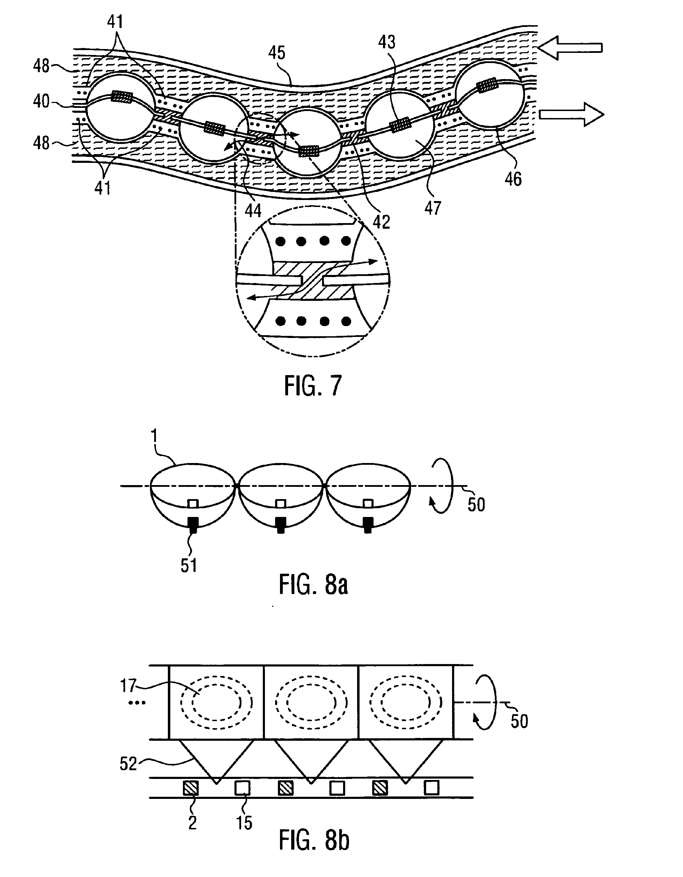

Figur 7 zeigt eine Wärmepumpe bzw. Wärmekraftmaschine, die flexibel aufgebaut ist. Als Volumenänderungselemente dienen mehrere Membranen oder Membranbereiche 40, welche mit Hilfe von Spulen 41 entweder bewegt werden können oder welche in den Spulen 41 Spannungen induzieren. Zwischen den Gasvolumina befinden sich die Regeneratoren 42, durch die bewegtes Gas hindurchströmt (durch einen Doppelpfeil 44 angedeutet). Die einzelnen Arbeitsräume 47 werden von einer Umwandung 46 umgeben. (Die Membranen oder Membranbereiche 40 werden mit Hilfe von Spulen bzw. Magneten 41 und 43 bewegt.) Oberhalb und unterhalb der thermoelektrischen Wandlermodule befinden sich Fluidkammern 48 mit entgegengesetzten Fluidströmen, deren Bewegungsrichtungen durch Pfeile gekennzeichnet sind. Die oben liegenden Arbeitsräume sind über die Regeneratoren 42 jeweils nur mit den jeweils links von ihnen befindlichen unten liegenden Arbeitsräumen verbunden (siehe Doppelpfeil 44). Bei der in Figur 7 gezeigten Ausführungsform handelt es sich um einem mehrfach wirkenden thermoelektrischen Wandler, da die Membranbereiche (40), die als Volumenänderungselemente dienen, jeweils Volumina benachbarter thermoelektrischer Wandlermodule verändern.

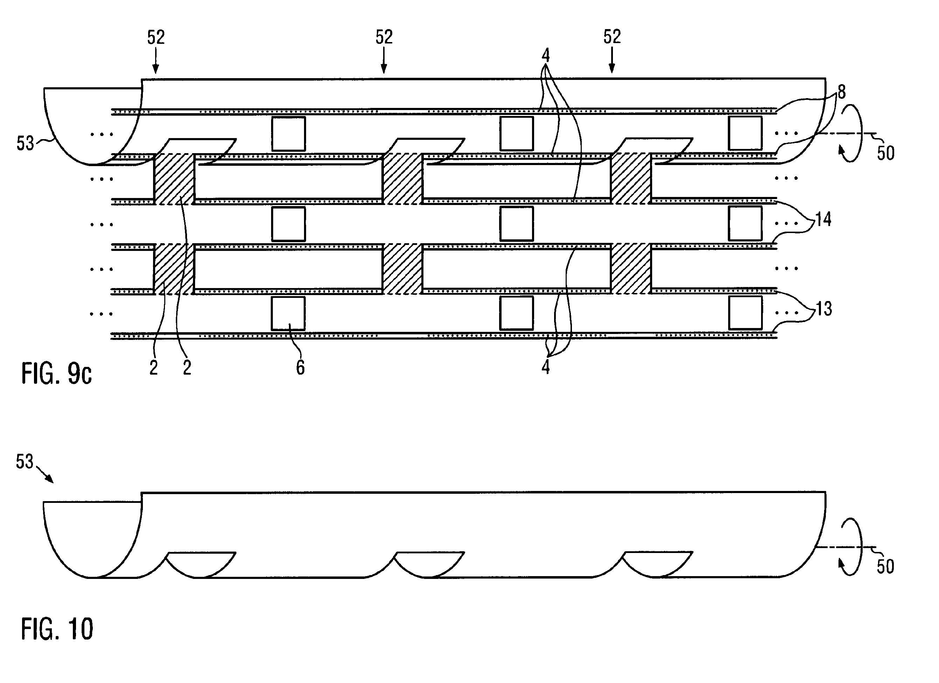

Figur 8 zeigt Vorrichtungen zur Nachführung von optischen Elementen. Die Nachführung von optischen Elementen ist sinnvoll, um die einfallende Sonneneinstrahlung maximieren zu können. In Figur 8a ist eine Nachführung von Hohlspiegeln 1 abgebildet und in Figur 8b ist eine Nachführung von einem Linsenfeld 17 abgebildet. In beiden Fällen lassen sich die optischen Elemente zumindest teilweise um eine Drehachse 50 drehen. Neben oder zusätzlich zu der Drehung ist auch eine Nachführung durch Verschiebung der optischen Elemente relativ zur den thermoelektrischen Wandlermodulen möglich. Weiter sind in Figur 8a thermoelektrische Wandlermodule 51 abgebildet, und in Figur 8b sind Kolben 15 und Regeneratoren 2 abgebildet. Besagte thermoelektrische Komponenten werden zumindest teilweise von Lichtstrahlen 52 beschienen, so dass sich bestimmte Gasvolumina der thermoelektrischen Wandlermodule erwärmen bzw. erhitzen. Daher wird durch die Nachführung der optischen Komponenten eine verbesserte Versorgung mit Wärmeenergie gewährleistet. In den Figuren 8a und 8b sind nur Reihen von optischen Elementen dargestellt. Es können jedoch thermoelektrische Wandler aus mehreren solchen Reihen bestehen, wobei jede Reihe eine Nachführungsvorrichtung umfasst, so dass die optischen Elemente einer Reihe um jeweils eine Drehachse 50 gedreht werden können. Wie in Figur 9c gezeigt, kann das optische Element auch aus einem linearen, drehbaren Hohlspiegel 53 bestehen, der die Lichtstrahlen 52 nur in einer Dimension bündelt und auf die jeweils heißen Gasvolumina der thermoelektrischen Wandlermodule fokussiert, oder das optische Element kann aus einer Zylinderlinse bestehen.

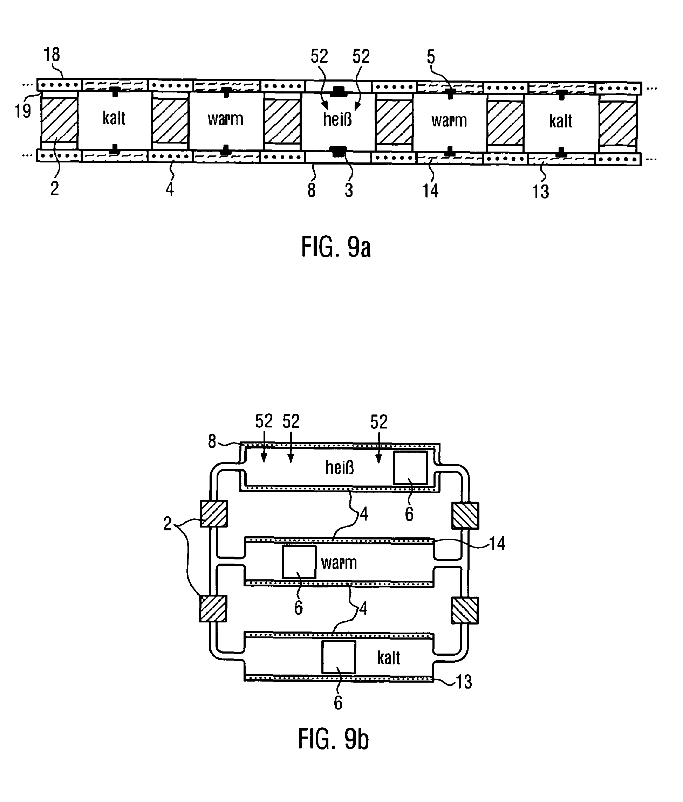

In den Figuren 9a und 9c werden mehrfach wirkende Vuilleumierbauformen gezeigt, in Figur 9b eine doppelt wirkende Vuilleumierbauform. In allen drei Fällen weisen die Bauformen jeweils heiße, warme und kalte Gasvolumina auf, wobei im Fall von Figur 9a die heißen, warmen und kalten Gasvolumina so angeordnet sind, dass benachbarte Vuilleumiermodule heiße bzw. kalte Gasvolumina gemeinsam nutzen (ein erstes Vuilleumiermodul hat die Gasvolumenabfolge kalt - warm - heiß, gefolgt von einem weiteren Vuilleumiermodul mit der Gasvolumenabfolge heiß - warm - kalt, gefolgt von einem weiteren Vuilleumiermodul mit der Gasvolumenabfolge kalt - warm - heiß, wobei diese Abfolge periodisch fortgesetzt wird). Im Fall der Figuren 9b und 9c liegen doppelt bzw. mehrfach wirkende Vuilleumiermaschinen vor, da in diesen thermoelektrischen Wandlern Volumenänderungselemente gemeinsam von benachbarten thermoelektrischen Wandlermodulen genutzt werden. In allen drei Fällen (Figur 9a, Figur 9b und Figur 9c) werden die heißen Gasvolumina mit Hilfe von Lichtstrahlen 52 und Absorbern 3 aufgeheizt und mit Hilfe von Vakua 8 warmgehalten. Im Fall von Figur 9a befinden sich die Komponenten in einem Innenrohr 19, welches von einem Außenrohr 18 umgeben wird. Im Zwischenraum zwischen den Rohren bewegen sich ein Fluidstrom 13 zum Kältetransport und ein Fluidstrom 14 zum Wärmetransport. Weiter weist die Vuilleumierbauform von Figur 9a Dichtungen 5 und Absorber 3 auf, welche gleichzeitig als Bewegungsbegrenzungselemente für die beweglichen Regeneratoren 2 dienen. Zusätzlich können die beweglichen Regeneratoren gegenseitig durch magnetische Abstoßung als Bewegungsbegrenzungselemente dienen. Die beweglichen Regeneratoren 2 sind mittels elektromagnetischer Komponenten 4 (Spulen) miteinander gekoppelt. In Figur 9b sind die Regeneratoren 2 an Verbindungsleitungen zwischen den Gasvolumina fest angebracht. Die Verdrängerkolben 6 sind mittels Spulen 4 elektromagnetisch gekoppelt (das heißt in die Spulen können einerseits Spannungen induziert werden, oder die Spulen können dazu verwendet werden, ein Magnetfeld zu erzeugen, welches die magnetischen Verdrängerkolben 6 bewegt). Weiter weist die doppelt wirkende Vuilleumiermaschine von Figur 9b einen Fluidstrom 14 für den Wärmetransport und einen Fluidstrom 13 für den Kältetransport auf. Über die beiden Fluidströme und über die elektromagnetischen Komponenten 4 können mehrere Vuilleumiermodule, nach Art von Figur 9b, aneinandergekoppelt werden. Die Phasenverschiebung zwischen dem Verdrängerkolben 6 im heißen Gasvolumen und dem Verdrängerkolben 6 im warmen Gasvolumen beträgt typischerweise vier fünftel π, und die Phasenverschiebung zwischen dem Verdrängerkolben 6 im heißen Gasvolumen und dem Verdrängerkolben 6 im kalten Gasvolumen beträgt typischerweise ein halb π für den Betrieb als reine Vuilleumiermaschine zur Erzeugung von Wärme und Kälte. Alternativ kann diese Bauform auch vorrangig als Stirlingmaschine zur Erzeugung von elektrischer Energie und Wärme betrieben werden, wobei in diesem Fall die oben genannten Phasenverschiebungen typischerweise ein halb π beziehungsweise ein π betragen. In diesem Fall entsteht in beiden Fluiden Abwärme, und der um ein halb π phasenverschobene Verdrängerkolben 6 dient als Arbeitskolben. Die Bauform in Figur 9c entspricht der Bauform in Figur 9b bis auf den Unterschied, dass statt doppelt wirkender Vuilleumiermaschinen mehrfach wirkende Vuilleumiermaschinen vorliegen, d.h. die Gasvolumina innerhalb der Rohre sind beidseitig durch bewegliche Verdrängerkolben 6 begrenzt.

Figur 10 zeigt einen Hohlspiegel 53, wie er in Figur 9c verwendet wird. Der Hohlspiegel 53 kann um die Achse 50 gedreht werden, um möglichst viel Licht einfangen zu können (z. B. bei sich relativ zum thermoelektrischen Wandler bewegenden Lichtquellen wie der Sonne). Im Fall vom Hohlspiegel 53 wird das Licht nicht in einem Brennpunkt, sondern in einer Geraden fokussiert. In diesem Fokus befindet sich typischerweise das zu beheizende Gasvolumen (z. B. in Form einer Röhre). Der Hohlspiegel 53 weist an mehreren Stellen Aussparungen auf, die als Durchlässe (z. B. für Verbindungsrohren bzw. Leitungen bzw. Halterungen) geeignet sind. Diese Art von Hohlspiegel 53 kann jedoch auch bei anderen modularen thermoelektrischen Wandlern verwendet werden, bei denen die thermoelektrischen Wandlernmodule zumindest teilweise entlang einer Geraden angeordnet sind.

Bewegliche Regeneratoren 2, wie beispielsweise in Figur 9a abgebildet, sind bedingt gasdurchlässig, so dass ein beweglicher Regenerator beim Durchströmen von Gas Wärme aufnehmen bzw. abgeben kann. Zugleich können schnell bewegte bewegliche Regeneratoren kurzzeitig einen Über- bzw. Unterdruck in dem entsprechenden angrenzenden Gasvolumen erzeugen. Im Fall von Figur 1, Figur 2, Figur 3 und Figur 9a ist es auch möglich, anstelle der beweglichen Regeneratoren jeweils feststehende Regeneratoren in Verbindung mit beweglichen Verdrängerkolben einzusetzen, wobei in diesem Fall die Gasvolumina über Verbindungsleitungen so miteinander verbunden werden, dass durchströmendes Gas die Regeneratoren erhitzt bzw. abkühlt.

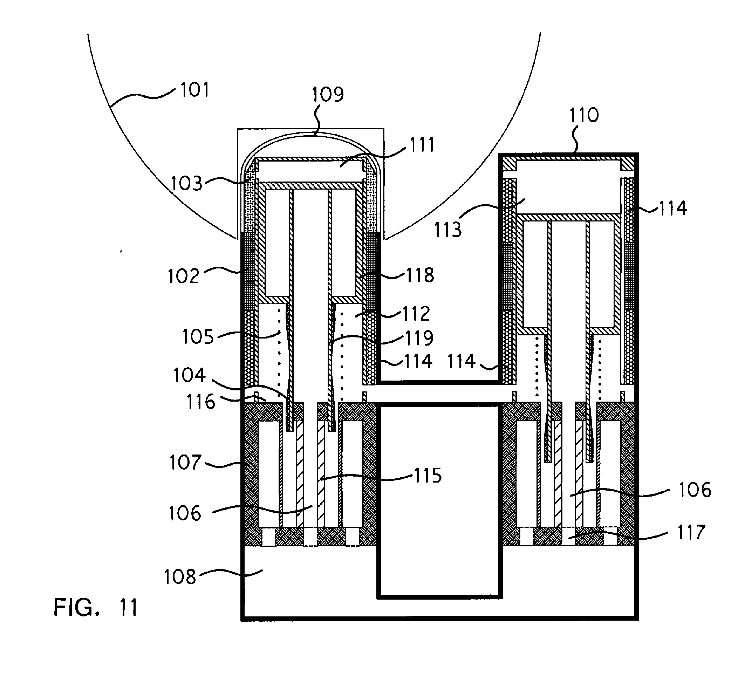

Weitere Aspekte der Erfindung und weitere erfindungsgemäße Ausführungsformen von thermoelektrischen Wandlern werden anhand der Figuren 11 bis 20 deutlich.

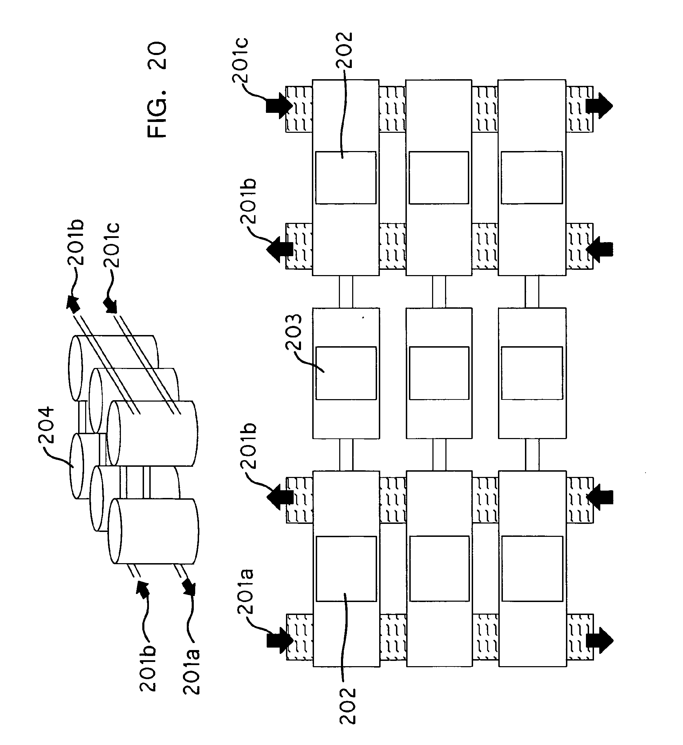

Fig. 11 zeigt einen thermoelektrischen Wandler unter Verwendung von Gasfedern 106. Er besteht aus zwei jeweils rotationssymmetrischen Zylindern und Kolben 118, die je eine hohle Kolbenstange 119 besitzen. Einfallendes Licht wird von einem schwenkbaren Hohlspiegel 101 so gebündelt, dass es größtenteils auf den Lichtabsorber 103 fällt, welcher von dem absorbierten Licht erwärmt wird. Diese Wärme kann dazu benutzt werden, um ein erstes Gasvolumen 111 zu erwärmen, so dass sich dieses Gasvolumen ausdehnt und den darunterliegenden Kolben nach unten drückt. Unterhalb des Lichtabsorbers 103 befindet sich der Regenerator 102. Unter dem Kolben 118 befindet sich eine mehradrige Stromzuführung 105 für bewegliche Spulen 104, die gleichzeitig als mechanische Feder dienen kann und in diesem Fall einer Auslenkung des Kolbens aus seiner Ruhelage entgegenwirkt. Im unteren Bereich des Kolbens befinden sich Spulen 104, welche zum Beschleunigen und Bremsen des Kolbens dienen. Die Spulen 104 können aus mehreren Segmenten bestehen und/oder können mit jeweils veränderlicher Wicklungsdichte ausgebildet sein, was dazu führt, dass eine veränderliche Induktionswirkung je nach Kolbenauslenkung auftritt. Dies hat den Effekt, dass die Kolbenbewegung durch die veränderliche Wicklungsdichte so beeinflusst wird, dass die Kolbenbewegung stärker bzw. schwächer abgebremst bzw. beschleunigt wird. Innerhalb des Jochs 107 befindet sich in der gezeigten Ausführungsform ein Permanentmagnet 115 in Form eines Rohres. Das Joch 107 wird verwendet, um einen magnetischen Schluss zu ermöglichen. Die Gasfedern 106 üben bei Auslenkung des Kolbens aus seiner Ruhelage eine Rücktreibende Kraft auf diesen aus. Zusätzlich zu der Gasfeder 106 im Zentralbereich des Kolbens können weitere Gasfedern 116 im Bereich der maximalen Kolbenauslenkung verwendet werden. Die zusätzlichen Gasfedern können als Bewegungsbegrenzungselement bzw. zur Absicherung dienen, damit der Kolben nicht gegen die angrenzende Wand stößt. Die Gasfedern 106 im Zentralbereich der Kolben können so ausgebildet sein, dass durch den kleineren Querschnitt im zweiten Gasvolumen 112 im Vergleich zum ersten Gasvolumen 111 und zum dritten Gasvolumen 113 die Kolben durch zugeführte Wärmeenergie angetrieben werden. Daher wird die Gasfeder 106 auch als "Reststirling" bezeichnet. Der zusätzliche Raum 108, der durch Löcher 117 im Joch mit den Gasfedern 106 verbunden ist, kann dazu dienen, dass die rücktreibende Kraft der Gasfeder verringert wird und dass die Gasfedern der beiden Kolben gekoppelt werden. Weiter sind in Fig. 11 Wärmetauscher 114 zum Abgeben von Wärme (angrenzend an das Gasvolumen 112) oder Abgeben von Kälte (angrenzend an das Gasvolumen 113) gezeigt. Die Wärmetauscher 114 können wie in Fig. 20 gezeigt an ein Fluid gekoppelt sein, das die Wärme/Kälte an einen Ort außerhalb der Zylinder transportiert. Abgesehen vom schwenkbaren Hohlspiegel 101 sind alle oben genannten Komponenten in einem Druckgehäuse 110 angebracht, welches einem Druck von beispielsweise 10 bar standhalten kann. Dadurch wird ermöglicht, dass der thermoelektrische Wandler mit einem Gas im Überdruck betrieben werden kann. Im Bereich des Hohlspiegels 101 besteht das Druckgehäuse 110 aus einer Glaswand bzw. Doppel- oder Mehrfachglaswand 109, welche lichtdurchlässig ausgebildet ist.

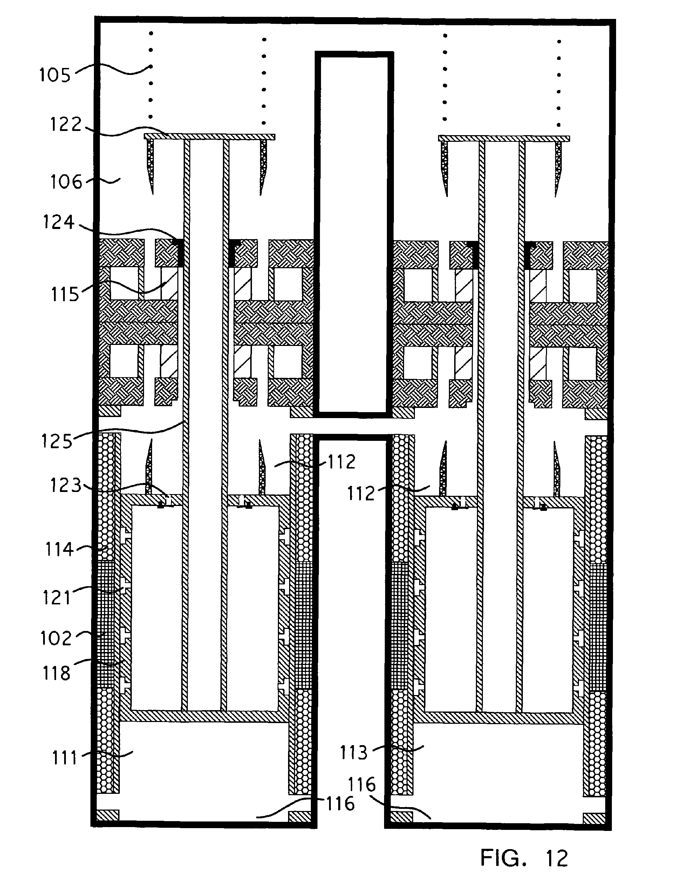

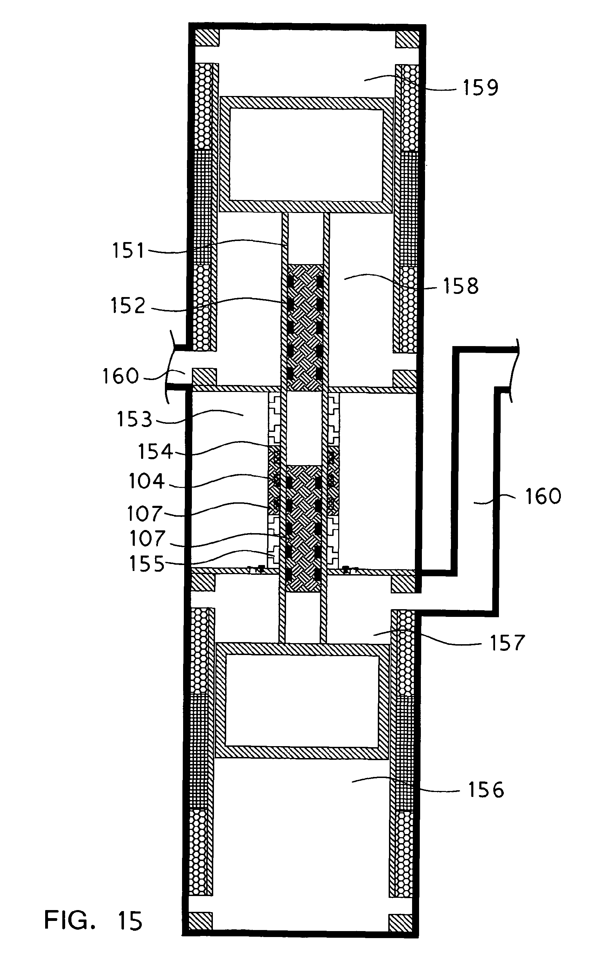

Ein weiterer thermoelektrischer Wandler mit Gasfedern ist in Fig. 12 gezeigt (elektrische bzw. elektronische Elemente bis auf Spulen sind hier und in den übrigen Abbildungen nicht dargestellt). Zusätzlich zu den bereits in Fig. 11 erwähnten Komponenten (wie beispielsweise Gasfedern 106, Regenratoren 102, Wärmetauscher 114, Permanentmagnete 115, Bewegungsbegrenzungselemente 116) werden in Fig. 12 Kolbenstangen 125 gezeigt, die im Gasfederraum 106 mit einem Befestigungselement 122 für bewegliche Spulen 104 verbunden sind. Weitere bewegliche Spulen sind am Kolben innerhalb des zweiten Gasvolumens befestigt. Das erste Gasvolumen 111, das typischerweise wärmer als das zweite Gasvolumen ist, sowie das dritte Gasvolumen 113 enthalten keine Spulen, wodurch Ohm'sche Verluste vermieden werden. Die Kolbenstange wird durch ein Gleitlager 124 geführt, das auch durch ein Gaslager, wie z.B. in Fig. 15 dargestellt, ersetzt werden kann. Weiter sind in Fig. 12 Austrittsöffnungen 121 für Luft bzw. Gas gezeigt, die als Luft- bzw. Gaslager dienen. Die Luft- bzw. Gaslager 121 können den Reibungswiderstand der Kolben verringern, was wiederum zu einem höheren Wirkungsgrad (aufgrund verringerter Reibungsverluste) des thermoelektrischen Wandlers führt. Die Ventile 123 dienen dazu, im Innenraum des Kolbens Überdruck zu erzeugen, mit dem die Gaslager 121 beschickt werden.

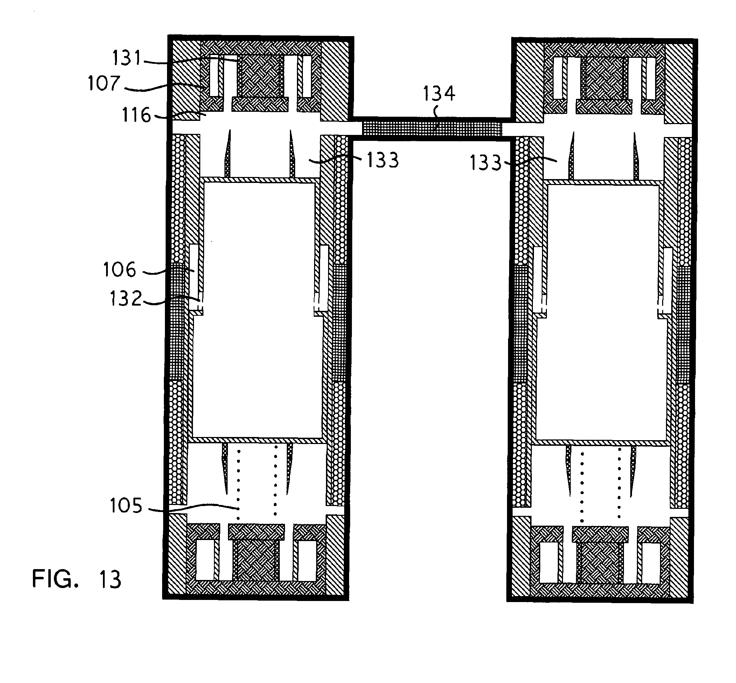

Fig. 13 zeigt einen thermoelektrischen Wandler mit Gasfedern 116 als Bewegungsbegrenzungselement und insbesondere mit Spule 131, die als Erregerwicklung zur Erzeugung eines Magnetfeldes dient. Alternativ kann diese Komponente 131 durch einen Permanentmagneten ersetzt werden. Der magnetische Schluss erfolgt durch das Joch 107. Weiter ist in Fig. 13 Loch 132 gezeigt, das dazu dient, das Volumen der Gasfeder 106 um das Volumen des Kolbeninnenraums zu erhöhen. Durch diese Volumenerhöhung wird erreicht, dass die Gasfeder 106 weicher wird, d.h. dass die rücktreibende Kraft auf den Kolben weniger stark ist. Um den Kolben durch Wärmeenergie anzutreiben, ist der Zylinderquerschnitt 133 im warmen Arbeitsraum kleiner als im heißen und im kalten Arbeitsraum. Diese Designoption wird auch mit "Reststirling" bezeichnet. Ein zusätzlicher Regenerator 134 wird verwendet, um im linken Zylinder mit einem anderen Ab- bzw. Nutzwärmetemperaturniveau arbeiten zu können als in dem Zylinder rechts.

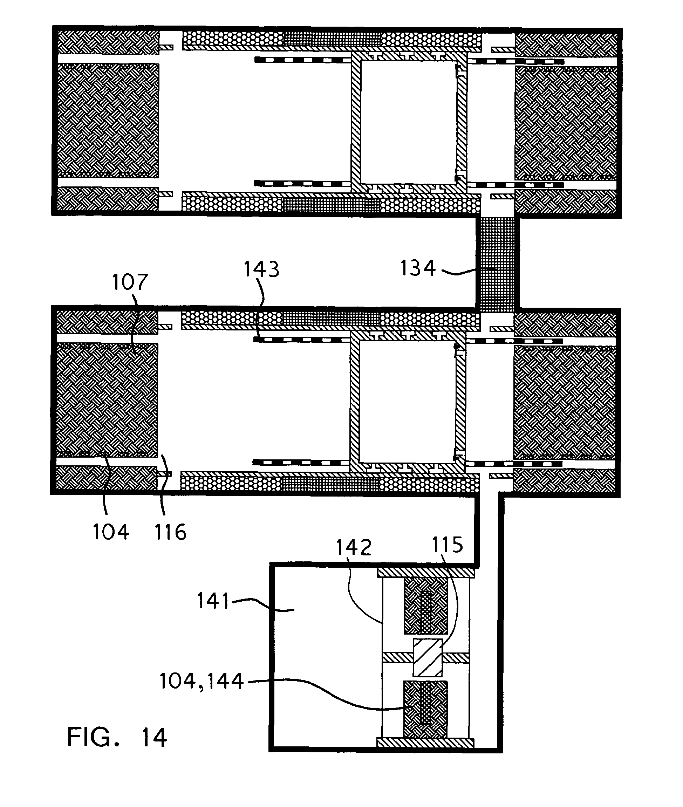

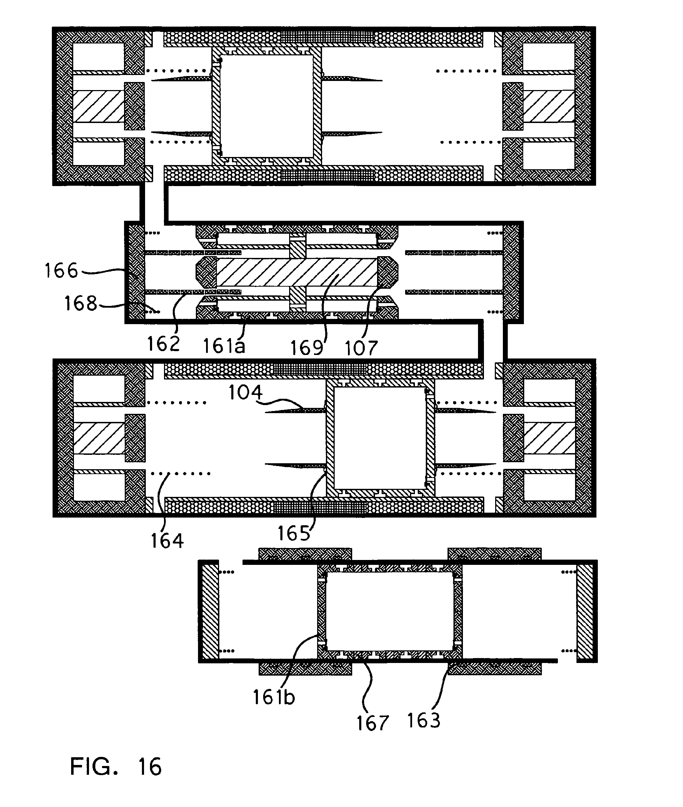

Fig. 14 zeigt einen thermoelektrischen Wandler mit einem zusätzlichen Zylinder 141. Dieser zusätzliche Zylinder kann auch in nachfolgender Fig. 16 statt des mittleren Zylinders mit dem Arbeitskolben eingesetzt werden. Wenn er entfällt, müssen die Kolben durch eine externe Stromquelle angetrieben werden. Innerhalb des Zylinders 141 befindet sich eine Membran, ein Federband oder eine Spiralfeder 142, unterhalb der sich ein Permanentmagnet 115 und ein Joch 144 mit Spule 104 befinden. Der Permanentmagnet 115 ist an der Membran bzw. dem Federband bzw. der Spiralfeder 142 befestigt. Durch die Oszillation des Permanentmagneten 115 wird Spannung zum Antrieb der Verdrängerkolben induziert. Ein so entstehender Strom kann in einem Kondensator bzw. einem Akku zwischengespeichert werden (nicht gezeigt). Auch im Fall des thermoelektrischen Wandlers aus Fig. 14 wird eine Gasfeder 116 als Bewegungsbegrenzungselement verwendet. Außerdem ist ein Joch 107 aus Ferrit oder in Form eines Blechpakets gezeigt, um Wirbelstromverluste vermeiden zu können. Um das Joch 107 sind mehrere Spulen 104 gewickelt, die zur Erzeugung eines örtlich wandernden Magnetwechselfelds dienen. Dadurch kann der Kolben gebremst bzw. beschleunigt werden. Der Kolben ist im Fall von Fig. 14 so ausgebildet, dass elektrische Ring- bzw. Kurzschlussleiter 143 an dem Kolben angebracht sind. Die elektrischen Ring- bzw. Kurzschlussleiter können aus Segmenten oder aus einem durchgehenden Rohrstück bestehen. Ein zusätzlicher Regenerator 134 wird verwendet, um im linken Zylinder mit einem anderen Ab- bzw. Nutzwärmetemperaturniveau arbeiten zu können als in dem Zylinder rechts.

Fig. 15 zeigt eine weitere Ausführungsform eines thermoelektrischen Wandlers. In dieser Ausführungsform kommt eine innen hohle Kolbenstange 151 zum Einsatz. In der Kolbenstange 151 befinden sich Ringleiter 152. Alternativ zu den Ringleitern 152 sind auch ein oder mehrere ringförmige oder scheibenförmige Permanentmagnete möglich. Im Bereich der Ringleiter 152 befindet sich auch jeweils ein Joch 107 aus Ferrit oder in Form eines Blechpakets. Im Raum 153 herrscht Überdruck, mit dem das Luftlager 155 für den Kolben beschickt wird. Anschließend an das Joch 107 bzw. die Ringleiter 152 befinden sich Spulen 104 für die Erzeugung eines wandernden Magnetfeldes. Im Bereich 154 ist der Kolbenantrieb getrennt vom Arbeitsgas. Hierdurch werden negative Einflüsse des heißen Arbeitsgases auf die elektrischen Komponenten verringert. Negative Einflüsse auf die elektrischen Komponenten können beispielsweise ein steigender Ohm'scher Widerstand oder eine Schädigung von Permanentmagneten sein. Weiter gezeigt in Fig. 15 ist das Luftlager 155, welches dazu dient, die magnetische Anziehungskraft der Stange 151 gegen die Zylinderwand zu kompensieren. Die oben diskutierte Antriebsart ist auch für einen Arbeitskolben oder ein Vuilleumiermodul mit Reststirling vorteilhaft, insbesondere weil die magnetische Anziehungskraft in den Bereichen Maximalauslenkung den rücktreibenden Druck des Arbeitsgases oder der Gasfeder ganz oder teilweise kompensieren kann. Der in Fig. 15 dargestellte Zylinder enthält Gasvolumina, die zu zwei verschiedenen Vuilleumiermodulen gehören: Das erste, heiße Gasvolumen 156 sowie das warme, zweite Gasvolumen 157 gehören zu einem Vuilleumiermodul, das über das Verbindungsrohr 160 mit einem weiteren, benachbarten und identisch aufgebauten Zylinder verbunden ist. In diesem benachbarten Zylinder befindet sich der zweite Teil des zweiten, warmen Gasvolumens 158 sowie das dritte, kalte Gasvolumen 159. Insgesamt können so 2, 3, 4 oder mehr als 4 solche Zylinder hintereinandergeschaltet sein, wobei das Gasvolumen 157 des letzten Zylinders wiederum mit dem Gasvolumen 158 des ersten Zylinders über ein Verbindungsrohr 160 verbunden ist. Der oben beschriebene Aufbau ist auch alternativ zum dargestellten linearen Asynchronantrieb mit Polysolenoidantrieb (in diesem Fall würden die Ringleiter 152 ersetzt werden durch ringförmige Permanentmagnete) oder Tauchspulenantrieb möglich.

Fig. 16 zeigt einen thermoelektrischen Wandler in Form eines Duplex-Stirlings, welcher sowohl zur Erzeugung von elektrischer Energie als auch als Wärmepumpe verwendet werden kann. Der Übertrag von Strom auf die beweglichen Spulen 104 der Verdrängerkolben erfolgt hier durch Bewegungsbegrenzungselemente 164, die elektrisch leitend sind und bei Kontakt mit dem Kolben über je mindestens 2 elektrische Kontaktstellen 165 elektrisch leitend mit den Spulen verbunden werden. Im Gegensatz zu Vuilleumiermaschinen besitzt diese Anordnung einen Arbeitskolben 161a. Der Arbeitskolben 161a ist in dieser Ausführungsform mit einem Permanentmagneten ausgestattet. Eine magnetische Anziehung erfolgt zwischen Kolben und am Zylinderende liegenden Joch 166, die der rücktreibenden Kraft durch die vom Kolben komprimierten oder expandierten Gasvolumina entgegenwirkt. Bewegungsbegrenzungselemente 168 in Form von Federn verhindern den Anschlag des Arbeitskolbens an den Zylinderenden. Segmentierte Spulen 162 werden verwendet, um elektrische Verluste zu verringern, wodurch wiederum der Wirkungsgrad des Duplex-Stirling erhöht wird. Alternativ zu dem Arbeitskolben 161a kann der Arbeitskolben 161b verwendet werden. Dieser Kolben ist ferromagnetisch und mit Ringmagneten 167 versehen, die ein örtlich alternierendes Magnetfeld erzeugen können. In diesem Ausführungsbeispiel wird ein wanderndes Magnetfeld mit Hilfe von Erregerwicklungen bzw. -spulen 163 erzeugt, die mit einem Mehrphasenstrom beschickt werden. Im Bereich maximaler Kolbenauslenkung hält das Magnetfeld zusätzlich den Kolben in dieser Position und wirkt dem Druck des komprimierten Arbeitsgases entgegen. Weiterhin kann alternativ zu den Arbeitskolben 161a und 161b ein Arbeitskolben verwendet werden, der im Gegensatz zu den Verdrängerkolben im Bereich seiner Eigenfrequenz schwingt, und der durch eine elektromagnetische Komponente gebremst oder beschleunigt wird, die im Bereich seines Bewegungsmittelpunkts angeordnet ist. Im Betrieb als Wärmepumpe muss der Arbeitskolben 161a oder 161b nicht unbedingt durch elektromagnetische Wechselwirkung mit Spulen 162 oder 163 angetrieben oder gebremst werden, sondern kann auch einfach eine harmonische Schwingung ausführen. Alternativ kann beim Arbeitskolben die elektromagnetische Komponente komplett entfallen, so dass der Arbeitskolben eine harmonische Schwingung im Bereich seiner Eigenfrequenz ausübt. Die Schwingungen der Verdrängerkolben und des Arbeitskolbens der in Fig. 16 dargestellten Anordnung sind über die elektromagnetischen Komponenten derart gekoppelt, dass sie jeweils mit einer bestimmten Phasenverschiebung korreliert sind. Es besteht die Möglichkeit, verschiedene Phasenverschiebungen durch das nicht dargestellte Steuergerät vorzugeben oder diese in Abhängigkeit von Messgrößen zu regeln. Dadurch lässt sich erreichen, dass entweder mehr Nutzwärme oder Nutzkälte erzeugt wird, oder dass alternativ mehr elektrische Energie erzeugt wird. Alternativ zu der Darstellung in Fig. 16 kann auch mindestens ein Verdrängerkolben und mindestens ein Arbeitskolben hintereinander im selben Zylinder angeordnet sein, wobei die Schwingung beider Kolben durch eine Feder oder Gasfeder gekoppelt werden können.

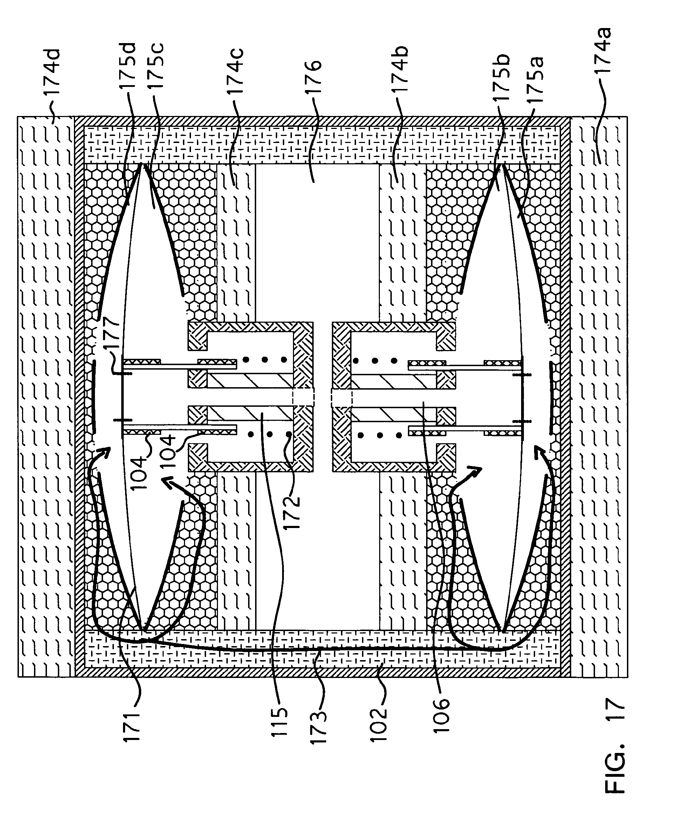

In Fig. 17 ist eine Vuilleumiermaschine mit Membranen 171 gezeigt. Die Membrane 171 dienen als Volumenänderungselemente. In dem gezeigten Ausführungsbeispiel kommen mechanische Federn 177 als Bewegungsbegrenzungselemente zum Einsatz. Die Gasfedern 106 bilden den Reststirling für den Antrieb der Membranschwingung. Weiter weist die Vuilleumiermaschine von Fig. 17 einen Zusatzraum 176 für die Gasfedern 106 auf, wodurch die Schwingungen der Membrane weiter gestaltet werden können. Durch die Schwingung der Membrane wird mit Hilfe der Spulen 104 und den beispielsweise röhrenförmigen Permanentmagneten 115 elektrische Spannung erzeugt. Die Stromversorgung 172 für die Spulen 104 befindet sich angrenzend an besagte Spulen 104. Der Weg 173 des Arbeitsgases durch die gasdurchlässigen Wärmetauscher bzw. Regeneratoren 102 ist mit Hilfe von Linien bzw. Pfeilen angedeutet. Je nach Auslenkung der Membrane 171 ändert sich die Richtung des Arbeitsgases (und somit die Pfeilrichtung des Weges 173). In der Vuilleumiermaschine aus Fig. 17 sind Arbeitsräume 175 und Fluide 174 zum Aufnehmen bzw. Abgeben von Wärmeenergie dargestellt. Es werden die Arbeitsräume 175, in denen sich typischerweise Gas befindet, gezeigt, nämlich einem heißen Arbeitsraum 175a, einem warmen Arbeitsraum 175b, einem weiteren warmen Arbeitsraum 175c und einem kalten Arbeitsraum 175d. Die entsprechenden Temperaturen der Arbeitsräume 175 werden an die Fluide 174 übertragen. Fluid 174a, das Wärmeenergie für den Betrieb der Vuilleumiermaschine bereitstellt, gibt Wärmeenergie an den darüberliegenden Wärmetauscher ab, der an besagtes Fluid 174a thermisch gekoppelt ist. Fluid 174b für Nutz- bzw. Abwärme nimmt Wärmeenergie aus dem darunterliegenden Wärmetauscher auf, an den es thermisch gekoppelt ist. In analoger Weise nimmt Fluid 174c für Nutz- bzw. Abwärme Wärmeenergie aus dem darüberliegenden Wärmetauscher auf, an den es thermisch gekoppelt ist. Die von der Vuilleumiermaschine produzierte Kälte kann an das Fluid 174d für Nutzkälte abgegeben werden bzw. von diesem bis zur weiteren Verwendung zwischengespeichert werden.

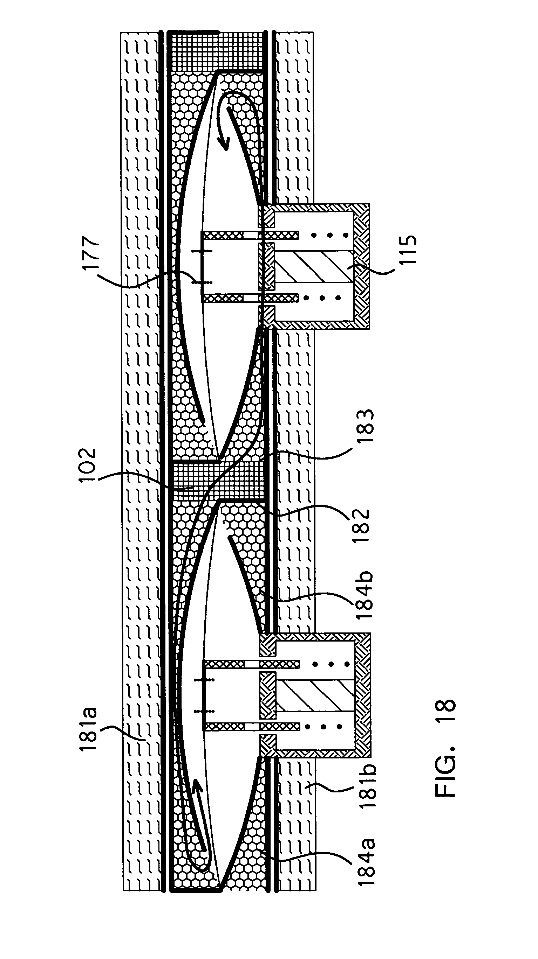

Fig. 18 zeigt einen flachen, modularen Stirling mit Membranen und nebeneinanderliegenden Modulen, von denen in dieser Abbildung nur zwei explizit dargestellt sind. Links und rechts seitlich angrenzend können sich jedoch weitere solcher Module befinden. Als Bewegungsbegrenzungselemente werden Federn 177 verwendet. Zwischen den einzelnen Modulen befinden sich jeweils Regeneratoren 102, welche im Bereich 182 nicht gasdurchlässig sind und im Bereich 183 gasdurchlässig ausgebildet sind, so dass ein Gasstrom möglich wird, wie durch einen Doppelpfeil angedeutet (also von links oben nach rechts unten bzw. von rechts unten nach links oben durch den Regenerator 102). Die beiden Wärmetauscherhälften 184a und 184b sind gasdurchlässig miteinander verbunden. Zum Zuführen von Wärmeenergie dient ein warmes bzw. heißes Fluid 181a und zum Abführen von Nutz- bzw. Abwärme dient ein kaltes Fluid 181b. Der gezeigte modulare Stirling mit Membranen kann auch durch Zuführen von elektrischer Energie als Heiz- bzw. Kühlelement betrieben werden. In diesem Ausführungsbeispiel werden in den einzelnen Stilingmodulen Permanentmagnete 115 verwendet.

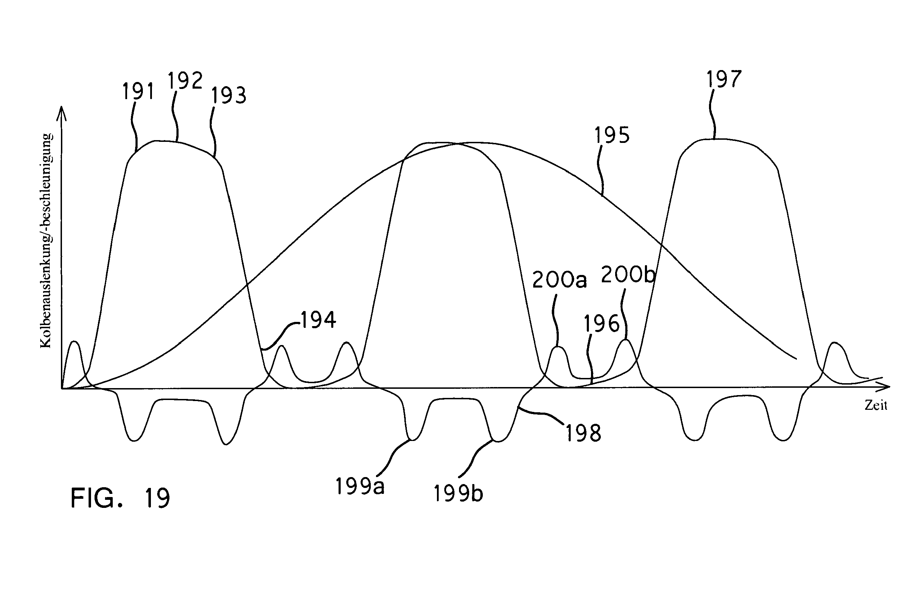

Fig. 19 zeigt die typische Kolbenauslenkung (oder allgemein die Bewegung eines Volumenänderungselements) eines thermoelektrischen Wandlers als Funktion der Zeit. Der Kolben bewegt sich zwischen einem unteren Umkehrpunkt 196 und einem oberen Umkehrpunkt 197. Im Bereich 191 wird der Kolben abgebremst. Dies geschieht vor allem durch Induktion in einer Spule. Im Bereich 192 können rücktreibende Kräfte der Gasfedern, mechanischer Federn oder der Bewegungsbegrenzungselemente auf den Kolben wirken, die durch eine bremsende Wirkung der elektromagnetischen Komponenten soweit reduziert werden können, dass der Kolben in diesem Bereich länger verbleibt und so die gewünschte Schwingungsform ausübt. Dies kann durch magnetische Anziehungskräfte unterstützt werden, wie bei den Arbeitskolben in Fig. 16 gezeigt. Weiter ist es möglich, dass die Energieübertragung in diesem Bereich beispielsweise in einen Kondensator erfolgt. Im Bereich 193 wird der Kolben durch das Bewegungsbegrenzungselement, eine Gasfeder, mechanische Federn und/oder die elektromagnetische Komponente beschleunigt. Der Kurvenverlauf 194 zeigt, dass durch die elektromagnetische Betätigung in den Bereichen maximaler Auslenkung die Schwingungsfrequenz gegenüber der harmonischen Schwingung 195 gesteigert werden kann und die Schwingung einer Rechteckschwingung ähnlich wird. Alternativ kann die Schwingungsfrequenz gegenüber der harmonischen Schwingung 195 auch reduziert werden. Beides geschieht durch Steuerung/Regelung von bremsender bzw. beschleunigender Wirkung der elektromagnetischen Komponenten durch die Steuerung. Die Kurve 198 zeigt die typische Beschleunigung eines Kolbens über die Zeit. Charakteristisch für die vorliegende Erfindung ist dabei das Auftreten von zwei lokalen Minima 199a und 199b bzw. zwei lokalen Maxima 200a bzw. 200b je Halbschwingung des Kolbens. Im Vergleich zu der oben diskutierten Kolbenbewegung 194 wird eine harmonische Schwingung 195 eines Arbeitskolbens oder Verdrängerkolbens mit Gasfeder bzw. mechanischer Feder dargestellt, die über den gesamten Hub wirkt. Der Verlauf 195 entspricht der Bewegung eines Kolbens eines herkömmlichen Freikolben-Stirlings oder einer herkömmlichen Freikolben-Vuilleumiermaschine. Durch den Kolbenverlauf 194, im Gegensatz zu einer harmonischen Schwingung 195, wird bei dieser Erfindung ein höherer Wirkungsgrad erzielt.

In Fig. 20 wird das Gegenstromprinzip gemäß dieser Erfindung verdeutlicht. Dieses Gegenstromprinzip kommt beispielsweise bei Vuilleumiermodulen, wie z.B. in Fig. 12 gezeigt oder bei Duplex-Stirlingmodulen, wie beispielsweise in Fig. 16 gezeigt, zum Einsatz. Vereinfachend sind hier nur die Zylinder 204 von Vuilleumiermodulen, wie z.B. in Fig. 12 gezeigt, dargestellt, bzw. Verdrängerkolben 202 und Arbeitskolben 203, wie aus Fig. 16 bekannt. Dargestellt sind Ströme von heißen Fluiden 201 a, warmen Fluiden 201 b und kalten Fluiden 201 c, wobei sich ein Fluidstrom je nach Einsatzart im weiteren Verlauf immer weiter erwärmt bzw. abkühlt. Diese Fluide sind über die Wärmetauscher 114, wie z.B. in Fig. 12 dargestellt, thermisch an die Gasvolumina der thermoelektrischen Wandlermodule gekoppelt. Durch das Gegenstromprinzip wird erreicht, dass die Wärmedifferenz zwischen benachbarten Fluidströmen (z.B. heiß und warm oder warm und kalt) bei jedem thermoelektrischen Wandlermodul möglichst gering gehalten wird, wodurch ein höherer Wirkungsgrad des entsprechenden thermoelektrischen Wandlers erzielt werden kann.

Neben den in den Figuren diskutierten Ausführungsformen, sind weitere Ausführungsformen möglich, bei denen die oben beschriebenen Komponenten in beliebigen anderen Kombinationen verwendet werden können.

## Patentansprüche

1. Thermoelektrischer Wandler, zur Umwandelung von Wärme, Kälte und/oder Sonnenlicht in elektrische Energie und/oder zur Erzeugung von Wärme und Kälte, umfassend:
ein thermoelektrisches Wandlermodul oder eine Mehrzahl von thermoelektrischen Wandlermodulen, wobei ein thermoelektrisches Wandlermodul wenigstens zwei räumlich begrenzte Gasvolumina aufweist, die durch einen Regenerator (2) gasdurchlässig miteinander verbunden sind, wobei es sich bei einem Gasvolumen um ein erstes Gasvolumen handelt, welches beim Betrieb des thermoelektrischen Wandlers wärmer ist als die Umgebungstemperatur oder ein Fluidstrom, wobei das erste Gasvolumen vorzugsweise mit Hilfe eines optischen Elements (1), wie beispielsweise eines Hohlspiegels oder einer Linse, oder durch thermische Ankopplung an ein Fluid, wie beispielsweise eine Kühlflüssigkeit oder ein Abgas, erwärmt werden kann, wobei es sich bei einem Gasvolumen um ein zweites Gasvolumen handelt, welches beim Betrieb des thermoelektrischen Wandlers kälter ist als das erste Gasvolumen, und wobei besagtes thermoelektrisches Wandlermodul wenigstens ein Volumenänderungselement (6, 118) geeignet zum Ändern der Größe eines oder mehrerer besagter Gasvolumina aufweist,
einen ersten Fluidstrombereich für einen ersten Fluidstrom (14, 201b) zum Ableiten von Wärme, an den das besagte zweite Gasvolumen des thermoelektrischen Wandlermoduls oder die besagten zweiten Gasvolumina der jeweiligen thermoelektrischen Wandlermodule thermisch gekoppelt sind, und
ein Volumenänderungselement (6, 118), das mit Hilfe einer elektromagnetischen Komponente (4) mittels Erzeugung eines Magnetfelds derartig bewegt und/oder verformt werden kann, dass die Größe mindestens eines Gasvolumens geändert wird,
**dadurch gekennzeichnet, dass**
die elektromagnetischen Komponenten, die Bewegungsbegrenzungselemente, der Gasdruck, Federn, Gewichtskraft und/oder Gasfedern derart dimensioniert bzw. gesteuert/geregelt sind, dass auf die Volumenänderungselemente zwischen zwei Durchgängen durch den Bewegungsmittelpunkt mindestens zwei lokale Beschleunigungsmaxima wirken.

2. Thermoelektrischer Wandler nach Anspruch 1, wobei die elektromagnetische Komponente (4) ein Magnet (169) oder eine elektrisch leitfähige Spule (104) oder ein kurzgeschlossener elektrischer Leiter (143) ist oder aus mehreren kurzgeschlossenen elektrischen Leitern (143) besteht oder als Polysolenoidantrieb oder linearer Asynchronantrieb ausgeführt ist.

3. Thermoelektrischer Wandler nach Anspruch 1 oder 2, wobei es sich bei dem Volumenänderungselement (6, 118) um einen verschiebbaren Kolben (6, 118) handelt, oder wobei es sich bei dem Volumenänderungselement (6, 118) um einen Rotations- oder Drehkolben handelt, oder wobei es sich bei dem Volumenänderungselement (6, 118) um eine bewegliche und/oder verformbare Membran (171) handelt, oder wobei es sich bei dem Volumenänderungselement (6, 118) um einen beweglichen Regenerator handelt.

4. Thermoelektrischer Wandler nach Anspruch 3, wobei der thermoelektrische Wandler mindestens 3 mal 3, bevorzugt mindestens 4 mal 4, weiter bevorzugt mindestens 5 mal 5 thermoelektrische Wandlermodule umfasst, und wobei der thermoelektrische Wandler insgesamt an die Form einer Oberfläche anpassbar ausgebildet ist und/oder wobei der thermoelektrische Wandler x mal y thermoelektrische Wandlermodule umfasst, mit 1 ≤ x ≤ 3, 8, 16 oder 100 und mit 1 ≤ y ≤ 3, 8, 16 oder 100 und/oder wobei die thermoelektrischen Wandlermodule relativ zueinander beweglich sind.

5. Thermoelektrischer Wandler nach einem der Ansprüche 1 bis 4, weiter umfassend:
einen zweiten Fluidstrombereich für einen zweiten Fluidstrom (13, 201c) zum Ableiten von Kälte, an den dritte Gasvolumina der jeweiligen thermoelektrischen Wandlermodule thermisch gekoppelt sind, wobei ein drittes Gasvolumen eines thermoelektrischen Wandlermoduls beim Betrieb des thermoelektrischen Wandlers kälter oder wärmer ist als das entsprechende zweite Gasvolumen des thermoelektrischen Wandlermoduls und vorzugsweise auch kälter als Umgebungstemperatur, und wobei der erste Fluidstrom (14, 201 b) und der zweite Fluidstrom (13, 201c) gegenläufig sein können, so dass bei einem ersten thermoelektrischen Wandlermodul beide Fluidströme maximale Temperaturen aufweisen, und so dass bei einem letzten thermoelektrischen Wandlermodul beide Fluidströme minimale Temperaturen aufweisen.

6. Thermoelektrischer Wandler nach einem der Ansprüche 1 bis 5, wobei ein thermoelektrisches Wandlermodul weiter ein Bewegungsbegrenzungselement (5, 116) zur Begrenzung der Bewegung des jeweiligen Volumenänderungselements (6, 118) umfasst, beispielsweise in Form einer Feder und/oder in Form eines Anschlags und/oder in Form eines Magneten und/oder in Form einer Gasfeder und/oder in Form eines elektronischen Elements zur Steuerung der elektromagnetischen Komponente (4), wobei das Bewegungsbegrenzungselement (5, 116) die Bewegung des jeweiligen Volumenänderungselements (6, 118) derart beschränkt, dass das Volumenänderungselement (6, 118) eine Schwingung ausführen kann, die von einer Sinusform abweicht.

7. Thermoelektrischer Wandler nach einem der Ansprüche 1 bis 6, wobei es sich bei den thermoelektrischen Wandlermodulen um Stirlingmodule und/oder um Duplex-Stirlingmodule und/oder um Vuilleumiermodule handelt, und wobei die thermoelektrischen Wandlermodule zur Erzeugung von elektrischem Strom und/oder mechanischer Arbeit und/oder Wärme und/oder Kälte dienen.

8. Thermoelektrischer Wandler nach einem der Ansprüche 1 bis 7, weiter umfassend:
eine Steuerung zur Regelung der Schwingungsfrequenz, Amplitude, Schwingungsform und Phasenverschiebung eines jeden Volumenänderungselements (6, 118) der thermoelektrischen Wandlermodule, wobei die Regelung der Schwingungsfrequenz, Amplitude, Schwingungsform und Phasenverschiebung mit Hilfe der jeweiligen elektromagnetischen Komponente (4) der thermoelektrischen Wandlermodule vorgesehen ist; und/oder
eine Vorrichtung zur Umwandlung der von den thermoelektrischen Wandlermodulen zugeführten und/oder abgeführten Energie in eine andere Form der elektrischen Energie, wie beispielsweise Wechselstrom mit einer vordefinierten Frequenz.

9. Thermoelektrischer Wandler nach einem der Ansprüche 1 bis 8, wobei es sich bei dem Volumenänderungselement (6, 118) um einen losen Kolben handelt.

10. Thermoelektrischer Wandler nach einem der Ansprüche 1 bis 9, wobei das Volumenänderungselement (6, 118) eine Schwingung ausführen kann, deren Schwingungsfrequenz sich um mindestens 10%, 25%, 50% oder 75% von der Eigenfrequenz eines entsprechenden nicht derart durch elektromagnetische Komponente (4) gekoppelten Volumenänderungselements (6, 118) unterscheidet.

11. Thermoelektrischer Wandler nach einem der Ansprüche 1 bis 10, wobei die elektromagnetische Komponente (4) zum Bewegen/Verformen des Volumenänderungselements (6, 118) mindestens zwei Tauchspulen oder mindestens einen Polysolenoidantrieb oder mindestens einen elektromagnetischen Asynchronantrieb enthält, oder wobei die elektromagnetische Komponente mindestens eine Spule enthält, deren Wicklungsdichte entlang der Spulenachse veränderlich ist.

12. Thermoelektrischer Wandler nach einem der Ansprüche 1 bis 11, wobei das Volumenänderungselement (6, 118) eine Schwingung ausführen kann, die annähernd rechteckförmig und/oder trapezförmig ist, und/oder wobei das Volumenänderungselement (6, 118) Schwingungen ausführen kann, deren Wellenform eine Steigung in den Wendepunkten aufweist, die sich von der Steigung in den Wendepunkten einer entsprechenden Sinuswellenform mit gleicher Wellenlänge,und Amplitude um mindestens 10%, 20%, 30% oder 50% unterscheidet, und wobei der Absolutwert besagter Steigung vorzugsweise größer ist als der entsprechende Absolutwert einer Steigung einer Sinuswellenform mit gleicher Wellenlänge und Amplitude, und/oder wobei die Funktion der Beschleunigung des Volumenänderungselement (6, 118) über die Zeit zwischen zwei Durchgängen durch den Bewegungsmittelpunkt jeweils mindestens zwei lokale Maxima (200a, 200b) oder zwei lokale Minima (199a, 199b) aufweist.

13. Thermoelektrischer Wandler nach einem der Ansprüche 1 bis 12, umfassend mindestens vier Gasvolumina, wobei das erste Gasvolumen durch einen Regenerator (2) gasdurchlässig mit dem zweiten Gasvolumen verbunden ist, das zweite Gasvolumen durch einen Regenerator (134) gasdurchlässig mit dem dritten Gasvolumen verbunden ist, und das dritte Gasvolumen durch einen Regenerator gasdurchlässig mit dem vierten Gasvolumen verbunden ist.

14. Thermoelektrischer Wandler nach einem der Ansprüche 1 bis 13, wobei mindestens ein Volumenänderungselement in den Bereichen seiner maximalen Auslenkung eine durch Anziehung zweier ferromagnetischer Elemente (166, 107) verursachte Kraftkomponente in Richtung der Auslenkung, d.h. weg vom Bewegungsmittelpunkt erfährt.

15. Verfahren zur Verwendung des thermoelektrischen Wandlers nach einem der Ansprüche 1 bis 14, wobei das Verfahren die Schritte umfasst:
Anordnen des thermoelektrischen Wandlers, so dass er Licht und/oder Wärme und/oder Kälte ausgesetzt ist; und
Erzeugen von elektrischem Strom und/oder mechanischer Arbeit und/oder Wärme und/oder Kälte.

16. Verfahren nach Anspruch 15, wobei die Temperatur des Fluidstroms (201 b) über die Fließgeschwindigkeit des Fluidstroms (201 b) geregelt wird.

## Claims

1. Thermoelectric converter for converting heat, cold and/or sunlight into electrical energy and/or for generating heat and cold, comprising:
a thermoelectric converter module or a plurality of thermoelectric converter modules, wherein a thermoelectric converter module comprises at least two spatially delimited gas volumes which are connected to one another in a gas-permeable manner by a regenerator (2), wherein one gas volume is a first gas volume which, during operation of the thermoelectric converter, is warmer than the ambient temperature or a fluid flow, wherein the first gas volume can be heated preferably by means of an optical element (1), such as for example a concave mirror or a lens, or by thermal coupling to a fluid, such as for example a cooling liquid or a waste gas, wherein one gas volume is a second gas volume which, during operation of the thermoelectric converter, is colder than the first gas volume, and wherein said thermoelectric converter module comprises at least one volume changing element (6, 118) suitable for changing the size of one or more of said gas volumes,
a first fluid flow region for a first fluid flow (14, 201 b) for dissipating heat, to which said second gas volume of the thermoelectric converter module or said second gas volumes of the respective thermoelectric converter modules is/are thermally coupled, and
a volume changing element (6, 118) which can be moved and/or deformed by means of an electromagnetic component (4) by generating a magnetic field in such a way that the size of at least one gas volume is changed,
**characterised in that**
the electromagnetic components, the movement limiting elements, the gas pressure, springs, weight force and/or gas springs are dimensioned and/or operated controlled in such a way that at least two local acceleration maxima act on the volume changing elements between two passes through the movement mid-point.

2. Thermoelectric converter according to claim 1, wherein the electromagnetic component (4) is a magnet (169) or an electrically conductive coil (104) or a short-circuited electrical conductor (143) or consists of a plurality of short-circuited electrical conductors (143) or is configured as a tubular drive or linear asynchronous drive.

3. Thermoelectric converter according to claim 1 or 2, wherein the volume changing element (6, 118) is a displaceable piston (6, 118), or wherein the volume changing element (6, 118) is a rotary piston, or wherein the volume changing element (6, 118) is a movable and/or deformable membrane (171), or wherein the volume changing element (6, 118) is a movable regenerator.

4. Thermoelectric converter according to claim 3, wherein the thermoelectric converter comprises at least 3 by 3, preferably at least 4 by 4, more preferably at least 5 by 5 thermoelectric converter modules, and wherein the thermoelectric converter is configured overall such as to be able to be adapted to the shape of a surface, and/or wherein the thermoelectric converter comprises x by y thermoelectric converter modules, where 1 ≤ x ≤ 3, 8, 16 or 100, and where 1 ≤ y ≤ 3, 8, 16 or 100, and/or wherein the thermoelectric converter modules are movable relative to one another.

5. Thermoelectric converter according to one of claims 1 to 4, further comprising:
a second fluid flow region for a second fluid flow (13, 201 c) for dissipating cold, to which third gas volumes of the respective thermoelectric converter modules are thermally coupled, wherein a third gas volume of a thermoelectric converter module, during operation of the thermoelectric converter, is colder or warmer than the corresponding second gas volume of the thermoelectric converter module and preferably also colder than ambient temperature, and wherein the first fluid flow (14, 201 b) and the second fluid flow (13, 201 c) may run in opposite directions so that in a first thermoelectric converter module both fluid flows have maximum temperatures and so that in a last thermoelectric converter module both fluid flows have minimum temperatures.

6. Thermoelectric converter according to one of claims 1 to 5, wherein a thermoelectric converter module further comprises a movement limiting element (5, 116) for limiting the movement of the respective volume changing element (6, 118), for example in the form of a spring and/or in the form of a stop and/or in the form of a magnet and/or in the form of a gas spring and/or in the form of an electronic element for operating the electromagnetic component (4), wherein the movement limiting element (5, 116) restricts the movement of the respective volume changing element (6, 118) in such a way that the volume changing element (6, 118) can carry out an oscillation differing from a sinusoidal shape.

7. Thermoelectric converter according to one of claims 1 to 6, wherein the thermoelectric converter modules are Stirling modules and/or duplex Stirling modules and/or Vuilleumier modules, and wherein the thermoelectric converter modules serve for generating electrical current and/or mechanical work and/or heat and/or cold.

8. Thermoelectric converter according to one of claims 1 to 7, further comprising:
a controller for controlling the oscillation frequency, amplitude, oscillation mode and phase shift of each volume changing element (6, 118) of the thermoelectric converter modules, wherein the controlling of the oscillation frequency, amplitude, oscillation mode and phase shift is provided by means of the respective electromagnetic component (4) of the thermoelectric converter modules; and/or
a device for converting the energy supplied and/or dissipated by the thermoelectric converter modules into a different form of electrical energy, such as for example alternating current having a defined frequency.

9. Thermoelectric converter according to one of claims 1 to 8, wherein the volume changing element (6, 118) is a loose piston.

10. Thermoelectric converter according to one of claims 1 to 9, wherein the volume changing element (6, 118) can carry out an oscillation, the oscillation frequency of which differs by at least 10%, 25%, 50% or 75% from the natural frequency of a corresponding volume changing element (6, 118) not coupled in such a way by an electromagnetic component (4).

11. Thermoelectric converter according to one of claims 1 to 10, wherein the electromagnetic component (4) for moving/deforming the volume changing element (6, 118) contains at least two plunger coils or at least one tubular drive or at least one electromagnetic asynchronous drive, or wherein the electromagnetic component contains at least one coil, the winding density of which is variable along the coil axis.

12. Thermoelectric converter according to one of claims 1 to 11, wherein the volume changing element (6, 118) can carry out an oscillation which is approximately square and/or trapezoidal, and/or wherein the volume changing element (6, 118) can carry out oscillations with a wave shape having a slope at the turning points which differs by at least 10%, 20%, 30% or 50% from the slope at the turning points of a corresponding sinusoidal waveform of the same wavelength and amplitude, and wherein the absolute value of said slope is preferably greater than the corresponding absolute value of a slope of a sinusoidal waveform of the same wavelength and amplitude, and/or wherein the function of the acceleration of the volume changing element (6, 118) has in each case at least two local maxima (200a, 200b) or two local minima (199a, 199b) over the time between two passes through the movement mid-point.

13. Thermoelectric converter according to one of claims 1 to 12, comprising at least four gas volumes, wherein the first gas volume is connected to the second gas volume in a gas-permeable manner by a regenerator (2), the second gas volume is connected to the third gas volume in a gas-permeable manner by a regenerator (134), and the third gas volume is connected to the fourth gas volume in a gas-permeable manner by a regenerator.

14. Thermoelectric converter according to one of claims 1 to 13, wherein at least one volume changing element, in the regions of its maximum deflection, experiences a force component in the direction of the deflection, i.e. away from the movement mid-point, caused by the attraction of two ferromagnetic elements (166, 107).

15. Method for using the thermoelectric converter according to one of claims 1 to 14, wherein the method comprises the steps:
arranging the thermoelectric converter so that it is exposed to light and/or heat and/or cold; and
generating electrical current and/or mechanical work and/or heat and/or cold.

16. Method according to claim 15, wherein the temperature of the fluid flow (201 b) is controlled via the flow rate of the fluid flow (201 b).

## Revendications

1. Convertisseur thermoélectrique pour convertir la chaleur, le froid et/ou la lumière solaire en énergie électrique et/ou pour produire de la chaleur et du froid, comprenant :
un module convertisseur thermoélectrique ou plusieurs modules convertisseurs thermoélectriques, étant précisé qu'un module convertisseur thermoélectrique comporte au moins deux volumes de gaz limités dans l'espace qui sont reliés entre eux de manière perméable au gaz par un régénérateur (2), qu'il s'agit, pour un volume de gaz, d'un premier volume de gaz qui est plus chaud, pendant le fonctionnement du convertisseur thermoélectrique, que la température ambiante ou qu'un courant de fluide, que le premier volume de gaz peut être chauffé de préférence à l'aide d'un élément optique (1) comme par exemple un miroir concave ou une lentille, ou par couplage thermique à un fluide comme par exemple un liquide de refroidissement ou un gaz d'échappement, qu'il s'agit, pour un volume de gaz, d'un deuxième volume de gaz qui est plus froid, pendant le fonctionnement du convertisseur thermoélectrique, que le premier volume de gaz, et que le module convertisseur thermoélectrique comporte au moins un élément variateur de volume (6, 118) apte à modifier la taille d'un ou plusieurs volumes de gaz,
une première zone de courant de fluide pour un premier courant de fluide (14, 201b), qui est destinée à évacuer la chaleur et à laquelle le deuxième volume de gaz du module convertisseur thermoélectrique ou les deuxièmes volumes de gaz des modules convertisseurs thermoélectriques respectifs sont couplés, et
un élément variateur de volume (6, 118) qui peut être déplacé et/ou déformé à l'aide d'un composant électromagnétique (4), grâce à la production d'un champ magnétique, de manière à modifier la taille d'au moins un volume de gaz,
**caractérisé en ce que** les composants électromagnétiques, les éléments limiteurs de mouvement, la pression gazeuse, des ressorts, la force de gravité et/ou des ressorts à gaz sont dimensionnés ou commandés/régulés de telle sorte qu'au moins deux maxima d'accélération locaux agissent sur les éléments variateurs de volume entre deux passages à travers le centre de déplacement.

2. Convertisseur thermoélectrique selon la revendication 1, étant précisé que le composant électromagnétique (4) est constitué par un aimant (169) ou une bobine conductrice d'électricité (104) ou un conducteur électrique court-circuité (143) ou se compose de plusieurs conducteurs électriques court-circuités (143) ou est réalisé sous la forme d'un entraînement à flux axial ou d'un entraînement asynchrone linéaire.

3. Convertisseur thermoélectrique selon la revendication 1 ou 2, étant précisé qu'il s'agit pour l'élément variateur de volume (6, 118) d'un piston mobile (6, 118), ou qu'il s'agit pour l'élément variateur de volume (6, 118) d'un piston rotatif ou tournant, ou qu'il s'agit pour l'élément variateur de volume (6, 118) d'une membrane mobile et/ou déformable (171), ou qu'il s'agit pour l'élément variateur de volume (6, 118) d'un régénérateur mobile.

4. Convertisseur thermoélectrique selon la revendication 3, étant précisé que le convertisseur thermoélectrique comprend au moins 3 fois 3, de préférence 4 fois 4, plus spécialement 5 fois 5 modules convertisseurs thermoélectriques, et que le convertisseur thermoélectrique est conçu pour pouvoir être adapté dans l'ensemble à la forme d'une surface, et/ou que le convertisseur thermoélectrique comprend x fois y modules convertisseurs thermoélectriques, avec 1 ≤ x ≤ 3, 8, 16 ou 100 et avec 1 ≤ y ≤ 3, 8, 16 ou 100 et/ou que les modules convertisseurs thermoélectriques sont mobiles les uns par rapport aux autres.

5. Convertisseur thermoélectrique selon l'une des revendications 1 à 4, comprenant par ailleurs :
une deuxième zone de courant de fluide pour un deuxième courant de fluide (13, 201c), qui est destinée à évacuer le froid et à laquelle des troisièmes volumes de gaz des modules convertisseurs thermoélectriques respectifs sont couplés thermiquement, étant précisé qu'un troisième volume de gaz d'un module convertisseur thermoélectrique est plus froid ou plus chaud, pendant le fonctionnement du convertisseur thermoélectrique, que le deuxième volume de gaz correspondant du module convertisseur thermoélectrique et aussi plus froid, de préférence, que la température ambiante, et que le premier courant de fluide (14, 201b) et le deuxième courant de fluide (13, 201c) peuvent être opposés, de sorte que pour un premier module convertisseur thermoélectrique, les deux courants de fluide présentent des températures maximales et que pour un dernier module convertisseur thermoélectrique, les deux courants de fluide présentent des températures minimales.

6. Convertisseur thermoélectrique selon l'une des revendications 1 à 5, étant précisé qu'un module convertisseur thermoélectrique comprend par ailleurs un élément limiteur de mouvement (5, 116) pour limiter le mouvement de l'élément variateur de volume (6, 118), par exemple sous la forme d'un ressort et/ou d'une butée et/ou d'un aimant et/ou d'un ressort à gaz et/ou d'un élément électronique pour commander le composant électromagnétique (4), étant précisé que l'élément limiteur de mouvement (5, 116) restreint le mouvement de l'élément variateur de volume (6, 118) de telle sorte que celui-ci puisse décrire une oscillation différente d'une forme sinusoïdale.

7. Convertisseur thermoélectrique selon l'une des revendications 1 à 6, étant précisé qu'il s'agit, pour les modules convertisseurs thermoélectriques, de modules Stirling et/ou de modules Stirling doubles et/ou de modules Vuilleumier, et que les modules convertisseurs thermoélectriques servent à produire du courant électrique et/ou de l'énergie mécanique et/ou de la chaleur et/ou du froid.

8. Convertisseur thermoélectrique selon l'une des revendications 1 à 7, comprenant par ailleurs :
une commande pour la régulation de la fréquence d'oscillation, de l'amplitude, de la forme d'oscillation et du déphasage de chaque élément variateur de volume (6, 118) des modules convertisseurs thermoélectriques, étant précisé que la régulation de la fréquence d'oscillation, de l'amplitude, de la forme d'oscillation et du déphasage est prévue à l'aide du composant électromagnétique (4) respectif des modules convertisseurs thermoélectriques ; et/ou
un dispositif pour convertir l'énergie amenée et/ou évacuée par les modules convertisseurs thermoélectriques en une autre forme d'énergie électrique, comme par exemple un courant alternatif avec une fréquence prédéfinie.

9. Convertisseur thermoélectrique selon l'une des revendications 1 à 8, étant précisé qu'il s'agit pour l'élément variateur de volume (6, 118) d'un piston mobile.

10. Convertisseur thermoélectrique selon l'une des revendications 1 à 9, étant précisé que l'élément variateur de volume (6, 118) peut décrire une oscillation dont la fréquence est différente d'au moins 10%, 25%, 50% ou 75% de la fréquence propre d'un élément limiteur de volume (6, 118) correspondant qui n'est pas couplé de cette manière par un composant électromagnétique (4).

11. Convertisseur thermoélectrique selon l'une des revendications 1 à 10, étant précisé que le composant électromagnétique (4) contient, pour déplacer/déformer l'élément variateur de volume (6, 118), au moins deux bobines mobiles ou au moins un entraînement à flux axial ou au moins un entraînement asynchrone électromagnétique, ou que le composant électromagnétique contient au moins une bobine dont la densité d'enroulement est variable le long de l'axe de bobine.

12. Convertisseur thermoélectrique selon l'une des revendications 1 à 11, étant précisé que l'élément variateur de volume (6, 118) peut décrire une oscillation qui est approximativement rectangulaire et/ou trapézoïdale, et/ou que l'élément variateur de volume (6, 118) peut décrire des oscillations dont la forme d'onde présente une pente, dans les points d'inflexion, qui est différente d'au moins 10%, 20%, 30% ou 50% de la pente dans les points d'inflexion d'une forme d'onde sinusoïdale correspondante de même longueur d'onde et de même amplitude, et que la valeur absolue de ladite pente est de préférence supérieure à la valeur absolue correspondante d'une pente d'une forme d'onde sinusoïdale de même longueur d'onde et de même amplitude, et/ou que la fonction de l'accélération de l'élément variateur de volume (6, 118) sur le temps présente entre deux passages par le centre de déplacement au moins deux maxima locaux (200a, 200b) ou deux minima locaux (199a, 199b).

13. Convertisseur thermoélectrique selon l'une des revendications 1 à 12, comprenant au moins quatre volumes de gaz, étant précisé que le premier volume de gaz est relié de manière perméable au gaz au deuxième volume de gaz par un régénérateur (2), que le deuxième volume de gaz est relié de manière perméable au gaz au troisième volume de gaz par un régénérateur (134), et que le troisième volume de gaz est relié de manière perméable au gaz au quatrième volume de gaz par un régénérateur.

14. Convertisseur thermoélectrique selon l'une des revendications 1 à 13, étant précisé qu'au moins un élément variateur de volume subit, dans les zones de sa déviation maximale, une composante de force provoquée par l'attraction de deux éléments ferromagnétiques (166, 107), dans le sens de la déviation, c'est-à-dire à l'opposé du centre de déplacement.

15. Procédé pour utiliser le convertisseur thermoélectrique selon l'une des revendications 1 à 14, étant précisé que le procédé comprend les étapes suivantes :
disposition du convertisseur thermoélectrique de sorte qu'il soit exposé à la lumière et/ou à la chaleur et/ou au froid ; et
production de courant électrique et/ou d'énergie mécanique et/ou de chaleur et/ou de froid.

16. Procédé selon la revendication 15, étant précisé que la température du courant de fluide (201b) est régulée par l'intermédiaire de la vitesse d'écoulement du courant de fluide (201b).
